# EUROPEAN PATENT SPECIFICATION

(11) **EP 2 677 787 B1**
(45) Date of publication and mention of the grant of the patent: **27.12.2017**
(21) Application number: 11782944.0
(22) Date of filing: 18.05.2011
(51) Int. Cl.: H04W 8/28, H04W 88/16, H04Q 3/00

(54) **NUMBER PORTABILITY REALIZATION METHOD AND INTERCONNECTING AND INTERWORKING GATEWAY**
VERFAHREN ZUR REALISIERUNG EINER NUMMERNPORTABILITÄT SOWIE VERNETZUNGS- UND ZUSAMMENARBEITS-GATEWAY
PROCÉDÉ PERMETTANT DE RÉALISER LA PORTABILITÉ D'UN NUMÉRO ET PASSERELLE D'INTERCONNEXION ET D'INTERFONCTIONNEMENT

(43) Date of publication of application: 25.12.2013
(73) Proprietor: Huawei Technologies Co., Ltd., Longgang District Shenzhen, Guangdong 518129 (CN)
(72) Inventor: ZHENG, Jianglong, Shenzhen Guangdong 518129 (CN)
(74) Representative: Gill Jennings & Every LLP
(86) International application number: PCT/CN2011/074250
(87) International publication number: WO 2011/144027

(56) References cited:
- EP-A1- 2 117 162
- EP-A2- 0 767 572
- WO-A1-2006/048038
- WO-A2-2007/061771
- CN-A- 1 578 500
- CN-A- 101 820 617
- CN-A- 101 902 702

## Description

### FIELD OF THE INVENTION

Embodiments of the present invention relate to the field of communications technologies, and in particular, to a number portability realization method and an interconnecting and interworking gateway.

### BACKGROUND OF THE INVENTION

Number portability (Number Portability, hereinafter referred to as NP) is a technology where a telecommunication user need not change the number thereof when migrating between different geographic regions in one country or performing network switching between different operators. The number portability, as a technology, not only is a supervision requirement proposed by the telecommunication supervision authority and organization for the operators to break the monopoly and lower the competition threshold, but also is a service provided by the operators to enhance their own competitiveness, which at the same time provides convenience for the telecommunication user to reserve social relation resources.

Open service access (Open Service Access, hereinafter referred to as OSA)/Parlay X is a technology, which promotes the creation of a new telecommunication application similar to "information technology (Information Technology, hereinafter referred to as IT) application of telecommunication enabling components" and encourages IT personnel not majoring in telecommunication in the IT communities to fast develop an attractive and creative application. As one important constituent part of a service delivery platform (Service Delivery Platform, hereinafter referred to as SDP) highly praised by the Tele-Management Forum (Tele-Management Forum, hereinafter referred to as TMF)/Organization for the Advancement of Structured Information Standards (Organization for the Advancement of Structured Information Standards, hereinafter referred to as OASIS), the Parlay X can effectively promote integration of information communication technology (Information Communication Technology, hereinafter referred to as ICT), providing an important technical support for the telecommunication field and especially for the enrichment, innovation and time to market (Time To Market, hereinafter referred to as TTM) of the application of mobile Internet.

Currently, the typical NP technologies mainly include the following four types: a mobile number portability signaling relay function (Mobile Number Portability Signaling Relay Function, hereinafter referred to as MNP-SRF) solution, an intelligent network (Intelligent Network, hereinafter referred to as IN) solution, a call transfer solution and an electronic numbering (Electronic Numbering, hereinafter referred to as ENUM)/domain name system (Domain Name System, hereinafter referred to as DNS) solution.

Basically, the foregoing four solutions transform a certain device in a centralized manner in the case that minimum alteration is made to the current network so as to provide mobile number portability (Mobile Number Portability, hereinafter referred to as MNP) capability of the whole network. Relatively speaking, the MNP-SRF solution is used most widely and is nearest to the user in the telecommunication network, which means that minimum alteration is made to the network element and application in the signaling transfer point (Signaling Transfer Point, hereinafter referred to as STP) of the current network and that a minimum number of signaling paths are influenced. With the development of the telecommunication network and with the emergence of the packet switched (Packet Switched, hereinafter referred to as PS) network and Internet Protocol Multimedia Subsystem (Internet Protocol Multimedia Subsystem, hereinafter referred to as IMS) network, although the foregoing four solutions have some limitations, basically the foregoing four solutions still have the capability of screening the application layer from the influence of the NP.

However, in recent years as the mobile Internet rises and the ICT trend with a mainstream of SDP develops, great changes also occur inside the telecommunication network. The application layer not only can communicate with the customer via the conventional core network or wireless network, but also can communicate with the customer via the IT Internet. The four NP solutions in the prior art only transform the core network so as to achieve the objective of screening the application layer from the influence of the NP, where the scenarios of the application layer and the Internet are not considered, leading to that without NP data, the application layer can hardly perform correct interworking, routing, charging or accounting.

EP2117162 A1(HUAWEI TECH CO LTD [CN]) 11 November 2009 (2009-11-11) discloses a method for charging for a call service comprising: intercepting a request message for triggering a pre-paid service transmitted from a switch device visited by a pre-paid calling subscriber to a Service Control Point (SCP), wherein the request message carries information on a called subscriber; querying a Number Portability Database (NPDB) according to the information on the called subscriber, and carrying RN information obtained by query on the called subscriber in the request message and forwarding the request message to the SCP if the called subscriber is an off-net subscriber; charging, by the SCP, the calling subscriber by taking the called subscriber as an off-net subscriber if the RN information on the called subscriber is carried in the request message, and charging the calling subscriber by taking the called subscriber as an on-net subscriber if the RN information on the called subscriber is not carried in the request message.

WO 2006/048038 A1(TELEFONAKTIEBOLAGER L M ERICSS [SE] 11 May 2006 (2006-05-11) discloses a method for handling Short Messages in a telecommunications network supporting number portability at a serving node (33, 43, 53), comprising the steps of receiving (615) a short message for a receiving entity (32, 42, 52) and fetching a subscriber mobile station number from the short message; interrogating (620) a number portability register (34, 44, 54) for receiving a charging related identifier representative of the network to which the mobile station number is ported; forwarding (625) the identifier to a Service Control Function node (36, 46, 56) for charging the short message according to porting information carried by the identifier; and sending (635) the short message to the receiving entity (32, 42, 52).

### SUMMARY OF THE INVENTION

Embodiments of the present invention provide a number portability realization method and an interconnecting and interworking gateway to screen an application layer network and the Internet from the influence of the NP and to implement accurate charging, routing or accounting.

An embodiment of the present invention provides a number portability realization method, which includes:
A. receiving, by an interconnecting and interworking gateway, a request message sent by a calling user, where the request message carries an identifier of a called user, and the calling user includes a regular user, an Internet user, a third-party service provider or a group user of a present network or an external network, wherein the interconnecting and interworking gateway is a Parlay X gateway or a SDP;
B. querying a number portability database according to the identifier of the called user to obtain routing information of the called user, where the routing information includes: a routed number ported into the present network from an originating network of the called user by the called user, a routed number ported out from the present network by the called user, a domain name of an originating domain of the called user, or an Internet protocol address of the called user; and
C. performing, according to a number portability service level agreement and the routing information of the called user, at least one of the following operations: performing routing on the called user, performing charging on the calling user or the called user, and generating an accounting bill between at least two of the third-party service provider, a present-network operator and an external-network operator, wherein a policy based on the NP SLA include three operations and tariffs corresponding to the three operations, the three operations comprise: "prohibit sending", "permitted to send" or "confirmation prompt".

An embodiment of the present invention further provides an interconnecting and interworking gateway, which includes:
a receiving module, configured to receive a request message sent by a calling user, where the request message carries an identifier of a called user, and the calling user includes a regular user, an Internet user, a third-party service provider or a group user of a present network or an external network;
an obtaining module, configured to query a number portability database according to the identifier of the called user to obtain routing information of the called user, where the routing information includes: a routed number ported into the present network from an originating network of the called user by the called user, a routed number ported out from the present network by the called user, a domain name of an originating domain of the called user, or an Internet protocol address of the called user; and
an operating module, configured to: according to a number portability service level agreement and the routing information of the called user, perform at least one of the following operations: performing routing on the called user, performing charging on the calling user or the called user, and generating an accounting bill between at least two of the third-party service provider, a present-network operator and an external-network operator, wherein a policy based on the NP SLA include three operations and tariffs corresponding to the three operations, the three operations comprise: "prohibit sending", "permitted to send" or "confirmation prompt".

According to the embodiments of the present invention, after receiving a request message sent by a calling user, an interconnecting and interworking gateway may query a number portability database according to an identifier of a called user carried in the request message to obtain routing information of the called user, and then, the interconnecting and interworking gateway may perform, according to a number portability service level agreement and the routing information of the called user, at least one of the following operations: performing routing on the called user, performing charging on the calling user or the called user, and generating an accounting bill between at least two of a third-party service provider, a present-network operator and an external-network operator, thereby screening the application layer network and the Internet from the influence of the NP, and further implementing accurate charging, routing or accounting on services.

### BRIEF DESCRIPTION OF THE DRAWINGS

To illustrate the technical solutions in the embodiments of the present invention or in the prior art more clearly, the following briefly describes the accompanying drawings required for describing the embodiments or the prior art. Apparently, the accompanying drawings in the following description merely show some embodiments of the present invention, and persons of ordinary skill in the art can derive other drawings from these accompanying drawings without creative efforts.
FIG. 1 is a flow chart of an embodiment of a number portability realization method according to the present invention;
FIG. 2 is a schematic diagram of an embodiment of a network architecture according to the present invention;
FIG. 3 is a flow chart of another embodiment of a number portability realization method according to the present invention;
FIG. 4 is a flow chart of still another embodiment of a number portability realization method according to the present invention;
FIG. 5 is a schematic structural diagram of an embodiment of an interconnecting and interworking gateway according to the present invention;
FIG. 6 is a schematic structural diagram of another embodiment of an interconnecting and interworking gateway according to the present invention; and
FIG. 7 is a schematic structural diagram of still another embodiment of an interconnecting and interworking gateway according to the present invention.

### DETAILED DESCRIPTION OF THE EMBODIMENTS

To make the objectives, technical solutions, and advantages the present invention more comprehensible, the following clearly and completely describes the technical solutions according to the embodiments of the present invention with reference to the accompanying drawings in the embodiments of the present invention. Apparently, the embodiments in the following description are merely a part of rather than all the embodiments of the present invention. All other embodiments obtained by persons of ordinary skill in the art based on the embodiments of the present invention without creative efforts shall fall within the protection scope of the present invention.

For the convenience of understanding each embodiment, in the following embodiments, for an interconnecting and interworking gateway, a network where the interconnecting and interworking gateway is located is "a present network", and other networks except the network where the interconnecting and interworking gateway is located are "external networks".
"a calling user" may include a regular user, an Internet user, a third-party service provider, or a group user of a present network or an external network, where the regular user may be a general terminal user, or may be an operator;
"a called user" may include a regular user, an Internet user, a third-party service provider, or a group user of a present network or an external network, where the regular user may be a general terminal user, or may be an operator;
"a present-network user" may include a regular user of the present network, an Internet user of the present network, a third-party service provider of the present network, or a group user of the present network, where the regular user may be a general terminal user, or may be an operator;
"an external-network user" may include a regular user of an external network, an Internet user of the external network, a third-party service provider of the external network, or a group user of the external network, where the regular user may be a general terminal user, or may be an operator;
"a service component" may include one or more of a short message service center (Short Message Service Center, hereinafter referred to as SMSC), an online charging system (Online Charging System, hereinafter referred to as OCS)/a convergent billing system (Convergent Billing System, hereinafter referred to as CBS), an interconnecting and interworking gateway of the external network and a short message service (Short Message Service, hereinafter referred to as SMS)-gateway mobile switching center (Gateway Mobile Switching Center, hereinafter referred to as GMSC);
"a network element of a core network of a present network" may include a mobile switching center (Mobile Switching Center, hereinafter referred to as MSC), a gateway general packet radio service support node (Gateway General Packet Radio Service Support Node, hereinafter referred to as GGSN) or a number portability signaling transfer point (NP-STP); and
"an interconnecting and interworking gateway" may be a gateway system such as a Parlay X gateway/SDP, an SMS gateway, and a multimedia message service center (Multimedia Message Service Center, hereinafter referred to as MMSC) gateway.

In an embodiment of the present invention, for a present network where an interconnecting and interworking gateway is located, when a called user of an external network uses the present network to provide services, the called user "ports in"; when a called user of the present network uses the external network to provide services, the called user "ports out".

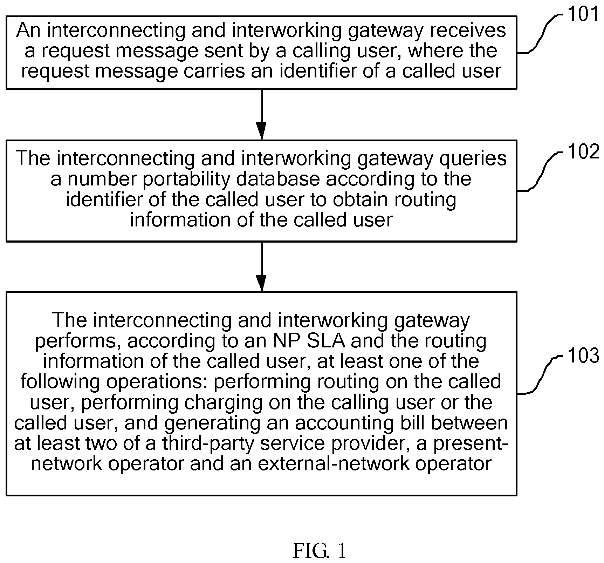

FIG. 1 is a flow chart of an embodiment of a number portability realization method according to the present invention. As shown in FIG. 1, the number portability realization method may include:
Step 101: An interconnecting and interworking gateway receives a request message sent by a calling user, where the request message carries an identifier of a called user.

The identifier of the called user may be digits, letters or a string that can uniquely identify the called user, such as a number or an international mobile subscriber identity (International Mobile Subscriber Identity, hereinafter referred to as IMSI) of the called user.

Step 102: The interconnecting and interworking gateway queries a number portability database according to the identifier of the called user to obtain routing information of the called user, where the routing information may include: a routed number ported into a present network from an originating network of the called user by the called user, a routed number ported out from the present network by the called user, a domain name of an originating domain of the called user, or an Internet Protocol (Internet Protocol, hereinafter referred to as IP) address of the called user.

According to the MNP specification of a 3rd generation partnership project (3rd Generation Partnership Project, hereinafter referred to as 3GPP), each country has a unified number portability database. After a user applies for network switching in a business hall of an operator of an originating network of the user, the operator of the originating network of the user synchronizes the routing information of the user to a national number portability database. To be specific in the embodiment of the present invention, when the called user applies for network switching in a business hall of an operator of an originating network of the called user, the operator of the originating network of the called user synchronizes the routing information of the called user to the national number portability database. In this way, the interconnecting and interworking gateway queries the number portability database according to the identifier of the called user, so as to obtain the routing information of the called user.

Step 103: The interconnecting and interworking gateway performs, according to a number portability service level agreement (NP Service Level Agreement, hereinafter referred to as NP SLA) and the routing information of the called user, at least one of the following operations: performing routing on the called user, performing charging on the calling user or the called user, and generating an accounting bill between at least two of a third-party service provider, a present-network operator and an external-network operator.

In this embodiment, before step 103, the interconnecting and interworking gateway can also negotiate the NP SLA with the calling user.

In this embodiment and in specific scenarios, a policy based on the NP SLA may include three operations, namely, "prohibit sending" "permitted to send" or "confirmation prompt", and tariffs corresponding to the three operations. For example, in a scenario where a present-network user sends a service request message to an external-network user, the policy based on the NP SLA may be that the interconnecting and interworking gateway prohibits the present-network user from sending the service request message to the external-network user, that the interconnecting and interworking gateway permits the present-network user to send the service request message to the external-network user or that before the present-network user sends the service request message to the external-network user, the interconnecting and interworking gateway prompts the present-network user for confirmation, and sends the service request message to the external-network user after obtaining a positive reply of the present-network user.

In addition, it should be noted that: When a service requested by the calling user involves two of the third-party service provider, the present-network operator and the external-network operator at the same time, an accounting operation is involved, and the accounting bill between at least two of the third-party service provider, the present-network operator and the external-network operator needs to be generated.

In one implementing manner of this embodiment, the request message in foregoing step 101 may be a service request message, where the service request message may be a called service request message such as a short message service, a third-party call or a teleconference. In this implementing manner, the foregoing step 103 may include the following two situations:
(103A1) After the interconnecting and interworking gateway determines, according to the routing information of the called user, that the called user ports out, the interconnecting and interworking gateway may add the routed number ported out from the present network by the called user, the domain name of the originating domain of the called user or the IP address of the called user to the identifier of the called user, for example, the routed number ported out from the present network by the called user may be added before the number of the called user, taking an example that the number of the called user is "135********" and the routed number ported out from the present network by the called user is "130", after the routed number ported out from the present network by the called user is added, the number of the called user becomes "130135********".

Then, after the interconnecting and interworking gateway determines that a processing policy based on the NP SLA allows the calling user to send the service request message to the called user of the external network, the interconnecting and interworking gateway may perform routing on the called user according to the routed number ported out from the present network by the called user, the domain name of the originating domain of the called user or the IP address of the called user, and generate the accounting bill between at least two of the third-party service provider, the present-network operator and the external-network operator.

In the foregoing scenario, the performing routing on the called user may be: forwarding, by the interconnecting and interworking gateway, the service request message to the interconnecting and interworking gateway of the external network, and carrying the routed number ported out from the present network by the called user, the domain name of the originating domain of the called user or the IP address of the called user in the forwarded service request message, and then returning a message sending result report to the calling user. When sending the foregoing service request message fails, the interconnecting and interworking gateway may prompt the calling user with appropriate routing information of the called user, for example, the interconnecting and interworking gateway may prompt the calling user about "the called number has been ported out, please dial '130' before the called number". This embodiment does not limit the routing information of the called user which the interconnecting and interworking gateway prompts the calling user.

In this embodiment, after the interconnecting and interworking gateway determines that the processing policy based on the NP SLA prohibits the calling user from sending the service request message to the called user of the external network, and determines, according to the routing information of the called user, that the called user ports out from the present network, the interconnecting and interworking gateway terminates the procedure of sending the service request message.

(103A2) After determining, according to the routing information of the called user, that the called user ports into the present network from the originating network of the called user, the interconnecting and interworking gateway preferably adds the routed number ported into the present network from the originating network of the called user by the called user, the domain name of the originating domain of the called user or the IP address of the called user to the identifier of the called user; that is to say, after it is determined that the called user ports into the present network from the originating network of the called user, the routed number ported into the present network from the originating network of the called user by the called user, the domain name of the originating domain of the called user or the IP address of the called user may be added to the identifier of the called user or may not be added, which is not limited in this embodiment. For example, the routed number ported into the present network from the originating network of the called user may be added before the number of the called user, taking an example that the number of the called user is "130********" and the routed number ported into the present network from the originating network of the called user is "135", after the routed number ported into the present network from the originating network of the called user is added, the number of the called user becomes "135130********".

After the interconnecting and interworking gateway determines that the processing policy based on the NP SLA allows the calling user to send the service request message to the called user of the present network and determines, according to the routing information of the called user, that the called user ports into the present network from the originating network of the called user, the interconnecting and interworking gateway may perform routing on the called user according to the routed number ported into the present network from the originating network of the called user by the called user, the domain name of the originating domain of the called user or the IP address of the called user, and generate the accounting bill between at least two of the third-party service provider, the present-network operator and the external-network operator.

In the foregoing scenario, the performing routing on the called user may be: sending, by the interconnecting and interworking gateway, the service request message to a network element of a core network of the present network via a service component, carrying the routed number ported into the present network from the originating network of the called user by the called user, the domain name of the originating domain of the called user or the IP address of the called user in the sent service request message, and then returning, by the interconnecting and interworking gateway, a message sending result report to the calling user. When sending the foregoing service request message fails, the interconnecting and interworking gateway may prompt appropriate routing information of the called user to the calling user, for example, the interconnecting and interworking gateway may prompt the calling user about "the called number has been ported out, please dial '130' before the called number". This embodiment does not limit the routing information of the called user prompted by the interconnecting and interworking gateway to the calling user.

In this implementing manner, if the interconnecting and interworking gateway has negotiated with the calling user to determine to perform a confirmation prompt policy in the NP SLA, after determining, according to the routing information of the called user, that the called user ports into the present network from the originating network of the called user or that the called user ports out from the present network, the interconnecting and interworking gateway may prompt the calling user for confirmation to the calling user according to the confirmation prompt policy, including prompting the calling user about the operation to be performed by the interconnecting and interworking gateway and tariffs corresponding to the operation to be performed by the interconnecting and interworking gateway. If the calling user agrees the interconnecting and interworking gateway to perform the prompted provision, then the interconnecting and interworking gateway perform at least one of the following operations: performing routing on the called user, performing charging on the calling user or the called user, and generating the accounting bill between at least two of the third-party service provider, the present-network operator and the external-network operator; if the calling user refuses to perform the prompted provision, terminate the procedure of sending the service request message.

In another implementing manner of this embodiment, the request message in foregoing step 101 may be a number portability query request message; in this way, in step 102, the interconnecting and interworking gateway queries the number portability database according to the identifier of the called user carried in the number portability query request message to obtain the routing information of the called user. In this implementing manner, step 103 may include the following two situations:
(103B1) After determining, according to the routing information of the called user, that the called user ports into the present network from the originating network of the called user, the interconnecting and interworking gateway sends the routed number ported into the present network from the originating network of the called user by the called user, the domain name of the originating domain of the called user or the IP address of the called user to the calling user, and receives the service request message which is sent by the calling user according to the routed number ported into the present network from the originating network of the called user by the called user, the domain name of the originating domain of the called user or the IP address of the called user, where the service request message carries the routed number ported into the present network from the originating network of the called user by the called user, the domain name of the originating domain of the called user or the IP address of the called user.

After the interconnecting and interworking gateway determines that the processing policy based on the NP SLA allows the calling user to send the service request message to the called user of the present network and determines, according to the routing information of the called user, that the called user ports into the present network from the originating network of the called user, the interconnecting and interworking gateway may perform routing on the called user according to the routed number ported into the present network from the originating network of the called user by the called user, the domain name of the originating domain of the called user or the IP address of the called user, and generate the accounting bill between at least two of the third-party service provider, the present-network operator and the external-network operator.

In the foregoing scenario, the performing routing on the called user may be: sending, by the interconnecting and interworking gateway, the service request message to the network element of the core network of the present network via the service component, carrying the routed number ported into the present network from the originating network of the called user by the called user, the domain name of the originating domain of the called user or the IP address of the called user in the sent service request message, and then returning, by the interconnecting and interworking gateway, a message sending result report to the calling user. When sending the foregoing service request message fails, the interconnecting and interworking gateway may prompt appropriate routing information of the called user to the calling user, for example, the interconnecting and interworking gateway may prompt the calling user about "the called number has been ported out, please dial '130' before the called number". This embodiment does not limit the routing information of the called user prompted by the interconnecting and interworking gateway to the calling user.

(103B2) After the interconnecting and interworking gateway determines, according to the routing information of the called user, that the called user ports out from the present network, the routed number ported out from the present network by the called user, the domain name of the originating domain of the called user or the IP address of the called user is sent to the calling user, so that the calling user sends the service request message to the interconnecting and interworking gateway of an external network according to the routed number ported out from the present network by the called user, the domain name of the originating domain of the called user or the IP address of the called user, and carries the routed number ported out from the present network by the called user, the domain name of the originating domain of the called user or the IP address of the called user in the sent service request message.

In the foregoing two implementing manners, when the calling user is a regular user of the present network, an Internet user of the present network, a third-party service provider of the present network or a group user of the present network, and when the interconnecting and interworking gateway determines that the processing policy based on the NP SLA allows the calling user to send the service request message to the called user of the present network or the called user of the external network, the interconnecting and interworking gateway may further perform, according to the routing information of the called user, a charging operation with a charging system of an operator to which the calling user belongs and carries the routing information of the called user in information exchanged with the charging system of the operator to which the calling user belongs. In addition, after determining, according to the routing information of the called user, that the called user ports into the present network from the originating network of the called user, the interconnecting and interworking gateway may further perform, according to the routing information of the called user, a charging operation with a charging system of an operator to which the called user belongs, and carries the routing information of the called user in the information exchanged with the charging system.

The foregoing embodiment can screen the application layer network and the Internet from the influence of the NP, and implement accurate charging, routing or accounting on services.

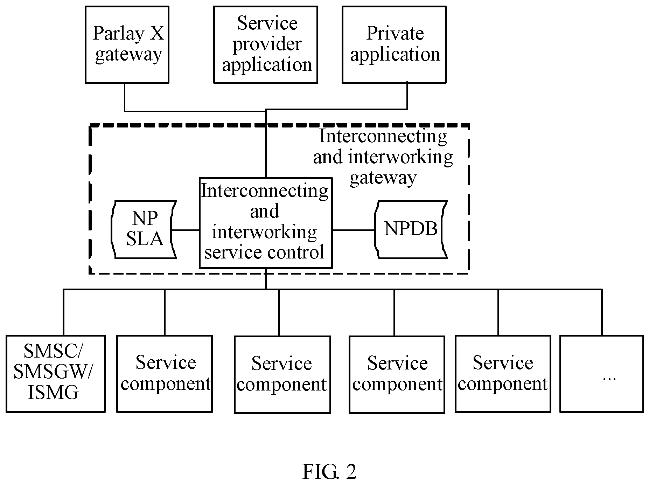

FIG. 2 is a schematic diagram of an embodiment of a network architecture according to the present invention. As shown in FIG. 2, in this embodiment, functions of supporting the NP or MNP are newly added in an interconnecting and interworking gateway, and a number portability database (NP Database, hereinafter referred to as NPDB) and NP SLA which is for a calling user are included. Also, an open interface of the interconnecting and interworking gateway provides optimal NP routing and query functions for a Parlay X gateway in an upper layer, a third-party service provider application or a private application, and correct charging, routing or accounting can be performed according to the NP SLA with the method provided in the embodiment of the present invention shown in FIG. 1. Because a number portability operation is always performed by the interconnecting and interworking gateway, neither each service component (such as an SMSC/Short Message Service Gateway (Short Message Service Gateway, hereinafter referred to as SMSGW)/Internet Short Message Gateway (Internet Short Message Gateway, hereinafter referred to as ISMG)) of an entire application layer network nor the Internet needs to save the NPDB and the NP SLA which is for the calling user, thereby screening the entire application layer network and the Internet from the influence of the NP.

In FIG. 2, the NPDB is embedded in the interconnecting and interworking gateway. This is merely one example of the present invention and the embodiment of the present invention is not limited thereto. Also the NPDB may be an NPDB and an STP-NPDB in an ENUM/DNS, or an NPDB in a national NP data center. When the NPDB is not embedded in the interconnecting and interworking gateway, the interconnecting and interworking gateway can access the foregoing NPDB via an interface.

In the embodiment of the present invention, the NP SLA not only can support the conventional SLA of interworking accounting between two operators, but also can support charging or accounting of the application granularity of an Internet user or a third-party service provider application, and can also accurately set a corresponding SLA for a Internet user or a third-party service provider application.

The number portability realization method of the present invention is described in detail in the following through two specific embodiments.

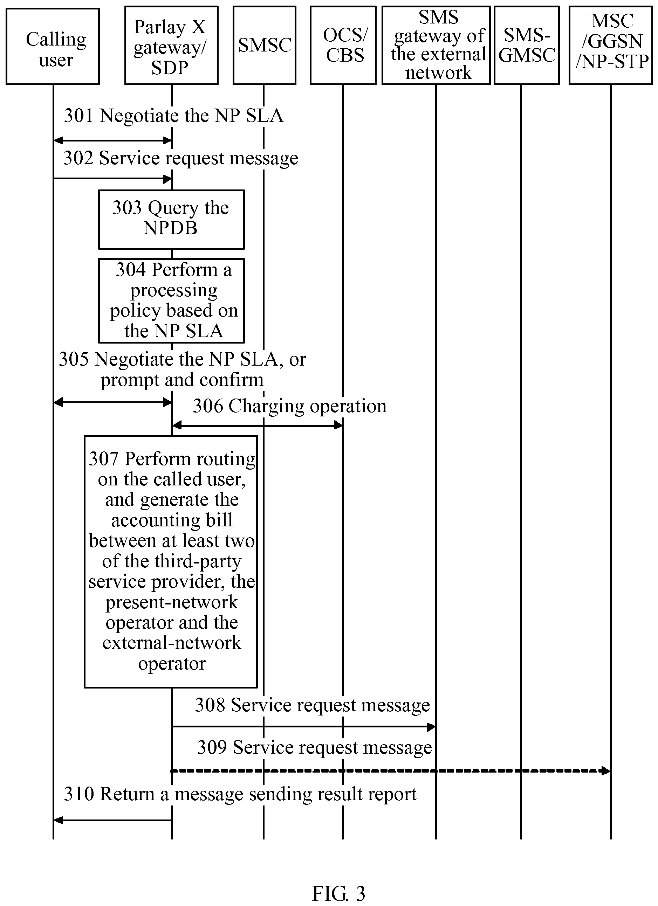

FIG. 3 is a flow chart of another embodiment of a number portability realization method according to the present invention. In this embodiment, an example that an interconnecting and interworking gateway is a Parlay X gateway/SDP is taken to introduce a process in which the Parlay X gateway/SDP provides ported-in (Ported-In) routing and ported-out (Ported-Out) routing for an NP user, and performs charging or accounting.

As shown in FIG. 3, the number portability realization method may include:
Step 301: Preferably, a calling user negotiates an NP SLA with a present-network operator to which a Parlay X gateway/SDP belongs.

In this embodiment and in specific scenarios, a policy based on the NP SLA may include three operations, namely, "prohibit sending" "permitted to send" or "confirmation prompt", and tariffs corresponding to the three operations. For example, in a scenario where a present-network user sends a service request message to an external-network user, the policy based on the NP SLA may be that the Parlay X gateway/SDP prohibits the present-network user from sending the service request message to the external-network user, that the Parlay X gateway/SDP permits the present-network user to send the service request message to the external-network user or that before the present-network user sends the service request message to the external-network user, the Parlay X gateway/SDP performs confirmation prompt to the present-network user, and sends the service request message to the external-network user after obtaining a positive reply of the present-network user.

Step 302: The calling user sends a service request message to the Parlay X gateway/SDP, such as an SMS, where the service request message carries an identifier of a called user.

In this embodiment, the identifier of the called user may be digits, letters or a string that can uniquely identify the called user, such as a number or an IMSI of the called user.

Step 303: The Parlay X gateway/SDP queries an NPDB according to the identifier of the called user to obtain routing information of the called user, where the routing information may include: a routed number (Routed Number, hereinafter referred to as RN) ported into a present network from an originating network of the called user by the called user, an RN ported out from the present network by the called user, a domain name of an originating domain of the called user, or an IP address of the called user.

If determining, according to the routing information of the called user, that the called user ports out, the Parlay X gateway/SDP adds the RN ported out from the present network by the called user, the domain name of the originating domain of the called user or the IP address of the called user to the identifier of the called user, for example, the RN ported out from the present network by the called user may be added before the number of the called user, taking an example that the number of the called user is "135********" and the RN ported out from the present network by the called user is "130", after the RN ported out from the present network by the called user is added, the number of the called user becomes "130135********".

If determining, according to the routing information of the called user, that the called user ports into the present network from the originating network of the called user, the Parlay X gateway/SDP may preferably add the RN ported into the present network from the originating network of the called user by the called user, the domain name of the originating domain of the called user or the IP address of the called user to the identifier of the called user, that is to say, after it is determined that the called user ports into the present network from the originating network of the called user, the RN ported into the present network from the originating network of the called user by the called user, the domain name of the originating domain of the called user or the IP address of the called user may be added to the identifier of the called user or may not be added, which is not limited in this embodiment. For example, the RN ported into the present network from the originating network of the called user may be added before the number of the called user, taking an example that the number of the called user is "130********" and the RN ported into the present network from the originating network of the called user is "135", after the RN ported into the present network from the originating network of the called user is added, the number of the called user becomes "135130********".

Step 304: The Parlay X gateway/SDP performs a processing policy based on the NP SLA.

Specifically, if the Parlay X gateway/SDP determines that the processing policy based on the NP SLA allows the calling user to send the service request message to the called user of an external network, and determines, according to the routing information of the called user, that the called user ports out from the present network, then the Parlay X gateway/SDP performs step 305 to step 310; if the Parlay X gateway/SDP determines that the processing policy based on the NP SLA prohibits the calling user from sending the service request message to the called user of an external network, and determines, according to the routing information of the called user, that the called user ports out from the present network, the Parlay X gateway/SDP terminates a procedure of sending the service request message.

In addition, if the Parlay X gateway/SDP determines that the processing policy based on the NP SLA allows the calling user to send the service request message to the called user of the present network, such as an SMS, and determines, according to the routing information of the called user, that the called user ports into the present network from the originating network of the called user, the Parlay X gateway/SDP performs step 305 to step 310; if the Parlay X gateway/SDP determines that the processing policy based on the NP SLA prohibits the calling user from sending the service request message to the called user of the present network, such as an SMS, and determines, according to the routing information of the called user, that the called user ports into the present network from the originating network of the called user, the Parlay X gateway/SDP terminates the procedure of sending the service request message.

Step 305: When the Parlay X gateway/SDP does not negotiate the NP SLA with the calling user, that is, step 301 is not performed, after it is determined that the called user ports into the present network from the originating network of the called user or that the called user ports out from the present network, the Parlay X gateway/SDP may negotiate the NP SLA with the calling user.

In this embodiment, if the Parlay X gateway/SDP has negotiated with the calling user to determine to perform a confirmation prompt policy in the NP SLA, after determining that the called user ports into the present network from the originating network of the called user or that the called user ports out from the present network, the Parlay X gateway/SDP performs prompt and confirmation to the calling user according to the confirmation prompt policy, including prompting the calling user about the operation to be performed by the Parlay X gateway/SDP and tariffs corresponding to the operation to be performed by the Parlay X gateway/SDP; if the calling user agrees to perform the prompted provision, and the calling user is a present-network user, perform step 306; if the calling user refuses to perform the prompted provision and the calling user is an external-network user, perform step 307; if the calling user refuses to perform the prompted provision, terminate the procedure of sending the service request message.

Step 306: The Parlay X gateway/SDP performs routing on the called user according to the routing information of the called user; performs a charging operation with a charging system of an operator to which the calling user belongs and carries the routing information of the called user in information exchanged with the charging system; and generates an accounting bill between at least two of a third-party service provider, a present-network operator and an external-network operator. Then, if it is determined according to the routing information of the called user that the called user ports out from the present network, perform step 308; if it is determined according to the routing information of the called user that the called user ports into the present network from the originating network of the called user, perform step 309.

Step 307: The Parlay X gateway/SDP performs routing on the called user according to the routing information of the called user, and generates the accounting bill between at least two of the third-party service provider, the present-network operator and the external-network operator. Then, if it is determined according to the routing information of the called user that the called user ports out from the present network, perform step 308; if it is determined according to the routing information of the called user that the called user ports into the present network from the originating network of the called user, perform step 309.

Step 308: The Parlay X gateway/SDP forwards the service request message to an interconnecting and interworking gateway of the external network, and carries the RN ported out from the present network by the called user, the domain name of the originating domain of the called user or the IP address of the called user in the forwarded service request message. In this embodiment, the interconnecting and interworking gateway of the external network may be an SMS gateway of the external network.

Step 309: The Parlay X gateway/SDP sends the service request message to a network element of a core network of the present network via a service component, and carries the RN ported into the present network from the originating network of the called user by the called user, the domain name of the originating domain of the called user or the IP address of the called user in the sent service request message.

Step 310: The Parlay X gateway/SDP returns a message sending result report to the calling user.

In this embodiment, when sending the foregoing service request message fails, the Parlay X gateway/SDP may prompt appropriate routing information of the called user to the calling user, for example, the interconnecting and interworking gateway may prompt the calling user about "the called number has been ported out, please dial '130' before the called number". This embodiment does not limit the routing information of the called user prompted by the interconnecting and interworking gateway to the calling user.

In addition, in this embodiment, after the Parlay X gateway/SDP determines, according to the routing information of the called user, that the called user ports into the present network from the originating network of the called user, the Parlay X gateway/SDP may further perform, according to the routing information of the called user, a charging operation with a charging system of an operator to which the called user belongs, and carry the routing information of the called user in information exchanged with the charging system of the operator to which the called user belongs; the performing, by the Parlay X gateway/SDP, the charging operation with the charging system of the operator to which the called user belongs may be executed in parallel with step 306 or step 307, or may be performed before or after step 306 or step 307, as long as the charging operation is performed before step 308 or step 309, which is not limited in this embodiment.

In this embodiment, a number portability operation is performed by the Parlay X gateway/SDP, and therefore neither each service component (such as an SMSC/SMSGW/ISMG) of an entire application layer network nor the Internet needs to save the NPDB and the NP SLA which is for the calling user, thereby screening the entire application layer network and the Internet from the influence of the NP, and implementing accurate charging, routing or accounting on services.

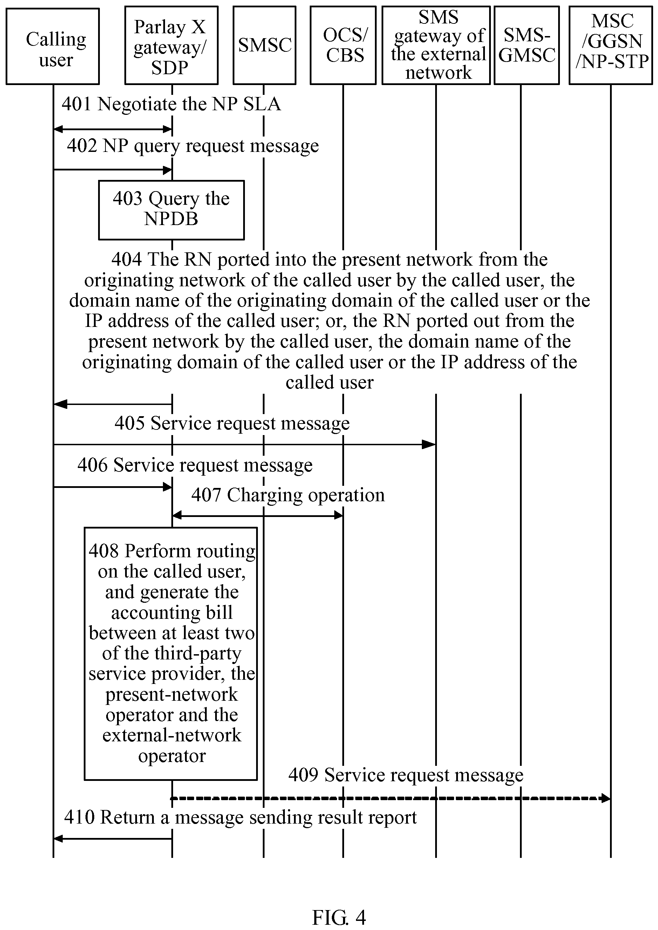

FIG. 4 is a flow chart of still another embodiment of a number portability realization method according to the present invention. In this embodiment, an example that an interconnecting and interworking gateway is a Parlay X gateway/SDP is taken to introduce a process in which the Parlay X gateway/SDP provides ported-in (Ported-In) routing and ported-out (Ported-Out) routing for an NP user, and performs charging and accounting. Compared with the embodiment of the present invention shown in FIG. 3, the difference lies in that the Parlay X gateway/SDP provides an interface for a calling user to query routing information of a called user, so that the calling user determines, according to the queried routing information of the called user, whether to send a service request message to the Parlay X gateway/SDP, or to an interconnecting and interworking gateway of an external network.

Step 401: Preferably, a calling user negotiates an NP SLA with a present-network operator to which a Parlay X gateway/SDP belongs.

In this embodiment and in specific scenarios, a policy based on the NP SLA may include three operations, namely, "prohibit sending" "permitted to send" or "confirmation prompt", and tariffs corresponding to the three operations. For example, in a scenario where a present-network user sends a service request message to an external-network user, the policy based on the NP SLA may be that the Parlay X gateway/SDP prohibits the present-network user from sending the service request message to the external-network user, that the Parlay X gateway/SDP permits the present-network user to send the service request message to the external-network user or that before the present-network user sends the service request message to the external-network user, the Parlay X gateway/SDP performs confirmation prompt to the present-network user, and sends the service request message to the external-network user after obtaining a positive reply of the present-network user.

Step 402: The Parlay X gateway/SDP receives an NP query request message sent by the calling user, where the NP query request message carries an identifier of a called user.

In this embodiment, the identifier of the called user may be digits, letters or a string that can uniquely identify the called user, such as a number or an IMSI of the called user.

Step 403: The Parlay X gateway/SDP queries an NPDB according to the identifier of the called user to obtain routing information of the called user, where the routing information may include: an RN ported into a present network from an originating network of the called user by the called user, an RN ported out from the present network by the called user, a domain name of an originating domain of the called user, or an IP address of the called user.

Step 404: If determining, according to the routing information of the called user, that the called user ports into the present network from the originating network of the called user, the Parlay X gateway/SDP sends the RN ported into the present network from the originating network of the called user by the called user, the domain name of the originating domain of the called user or the IP address of the called user to the calling user, and then performs step 406; if the Parlay X gateway/SDP determines, according to the routing information of the called user, that the called user ports out from the present network, the Parlay X gateway/SDP sends the RN ported out from the present network by the called user, the domain name of the originating domain of the called user or the IP address of the called user to the calling user and then performs step 405.

Step 405: The calling user sends a service request message such as an SMS to an interconnecting and interworking gateway of an external network according to the RN ported out from the present network by the called user, the domain name of the originating domain of the called user or the IP address of the called user, and carries the RN ported out from the present network by the called user, the domain name of the originating domain of the called user or the IP address of the called user in the sent service request message. In this embodiment, the interconnecting and interworking gateway of the external network may be an SMS gateway of the external network.

Step 406: The Parlay X gateway/SDP receives the service request message which is sent by the calling user according to the RN ported into the present network from the originating network of the called user by the called user, the domain name of the originating domain of the called user or the IP address of the called user, where the service request message carries the RN ported into the present network from the originating network of the called user by the called user, the domain name of the originating domain of the called user or the IP address of the called user. Then, if the calling user is a present-network user, perform step 407; if the calling user is an external-network user, perform step 408.

This embodiment does not limit the specific form of the service request message, and for example, the service request message may be an SMS or a Web short message service (WebSMS). However, this embodiment takes an example that the service request message is the SMS for description.

Step 407: If determining that a processing policy based on the NP SLA allows the calling user of the present network to send the service request message to the called user of the present network, the Parlay X gateway/SDP performs routing on the called user according to the RN ported into the present network from the originating network of the called user by the called user, the domain name of the originating domain of the called user or the IP address of the called user; performs a charging operation with a charging system of an operator to which the calling user belongs, and carries the RN ported into the present network from the originating network of the called user by the called user, the domain name of the originating domain of the called user or the IP address of the called user in information exchanged with the charging system; and generates an accounting bill between at least two of a third-party service provider, a present-network operator and an external-network operator. Then, perform step 409.

Step 408: If determining that the processing policy based on the NP SLA allows the calling user of the external network to send the service request message to the called user of the present network, the Parlay X gateway/SDP performs routing on the called user according to the RN ported into the present network from the originating network of the called user by the called user, the domain name of the originating domain of the called user or the IP address of the called user, and generates the accounting bill between at least two of the third-party service provider, the present-network operator and the external-network operator. Then, perform step 409.

Step 409: The Parlay X gateway/SDP sends the service request message to a network element of a core network of the present network via a service component, and carries the RN ported into the present network from the originating network of the called user by the called user, the domain name of the originating domain of the called user or the IP address of the called user in the sent service request message.

Step 410: The Parlay X gateway/SDP returns a message sending result report to the calling user.

In this embodiment, when sending the foregoing service request message fails, the Parlay X gateway/SDP may prompt appropriate routing information of the called user to the calling user, for example, the interconnecting and interworking gateway may prompt the calling user about "the called number has been ported out, please dial '130' before the called number". This embodiment does not limit the routing information of the called user prompted by the interconnecting and interworking gateway to the calling user.

In addition, in this embodiment, after the Parlay X gateway/SDP determines, according to the routing information of the called user, that the called user ports into the present network from the originating network of the called user, the Parlay X gateway/SDP may further perform, according to the routing information of the called user, a charging operation with a charging system of an operator to which the called user belongs, and carry the routing information of the called user in information exchanged with the charging system of the operator to which the called user belongs; the performing, by the Parlay X gateway/SDP, the charging operation with the charging system of the operator to which the called user belongs may be executed in parallel with step 407 or step 408, or may be performed before or after step 407 or step 408, as long as the charging operation is performed before step 409, which is not limited in this embodiment.

In this embodiment, a number portability operation is performed by the Parlay X gateway/SDP, and therefore neither each service component (such as an SMSC/SMSGW/ISMG) of an entire application layer network nor the Internet needs to save the NPDB and the NP SLA which is for the calling user, thereby screening the entire application layer network and the Internet from the influence of the NP, and implementing accurate charging, routing or accounting on services.

The embodiments of the present invention provide a number portability realization method. By adding the functions of supporting the NP or MNP in the Parlay X gateway/SDP and the NPDB is embed preferably, finally an open interface provides optimal NP routing and query functions for a Parlay X gateway in an upper layer, a third-party service provider application or a private application, and correct charging, routing or accounting can be performed according to the NP SLA with the method provided in the embodiment shown in FIG. 1, FIG. 3 or FIG. 4. Because the number portability operation is performed by the Parlay X gateway/SDP, neither each service component (such as an SMSC/SMSGW/ISMG) of the entire application layer network nor the Internet needs to save the NPDB and the NP SLA which is for the calling user, thereby screening the entire application layer network and the Internet from the influence of the NP. Because the Parlay X gateway/SDP is closest to an ICT application, little alteration is made to the network in the embodiment of the present invention. As long as the functions of supporting the NP and the MNP are added in the Parlay X gateway/SDP, the ICT application layer or an underlying network can be screened from the influence. And for the ICT application, the Parlay X gateway/SDP can provide an optimal routing or communicating path, and can perform correct charging or accounting. In addition, for the ICT application, the Parlay X gateway/SDP extends the application scope of the ICT application via the NP SLA. Generally, a conventional gateway prohibits delivering a message of a calling user or a called user in other network than a present network, because no agreement exists between an operator, a third-party service provider, a corporate user or an Internet user, but only a simple agreement between the originating operator of the calling user and the originating operator of the called user exists, so that charging or accounting can hardly be performed accurately. However, these problems can be solved via the NP SLA, and the application scope of the ICT application can be extended via the NP SLA.

Persons of ordinary skill in the art may understand that all or a part of steps of the method in the foregoing embodiments may be implemented by a program instructing relevant hardware. The program may be stored in a computer readable storage medium. When the program is executed, the steps of the method of the foregoing embodiment are performed. The foregoing storage medium includes any medium that is capable of storing program codes, such as a read only memory (Read Only Memory, hereinafter referred to as ROM), a random access memory (Random Access Memory, hereinafter referred to as RAM), a magnetic disk or an optical disk. The foregoing hardware may be a processor, such as a central processing unit (Central Processing Unit, hereinafter referred to as CPU), and may also be a programmable logic device such as a single-chip microcomputer, a complex programmable logic device (Complex Programmable Logic Device, hereinafter referred to as CPLD) or a field programmable gate array (Field Programmable Gate Array, hereinafter referred to as FPGA).

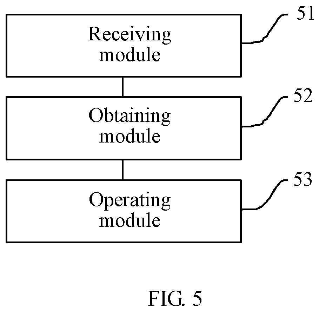

FIG. 5 is a schematic structural diagram of an embodiment of an interconnecting and interworking gateway according to the present invention. The interconnecting and interworking gateway in this embodiment can implement the flow of the embodiment of the present invention shown in FIG. 1. As shown in FIG. 5, the interconnecting and interworking gateway may include: a receiving module 51, an obtaining module 52 and an operating module 53.

The receiving module 51 is configured to receive a request message sent by a calling user, where the request message carries an identifier of a called user, and the identifier of the called user may be digits, letters or a string that can uniquely identify the called user such as a number or an IMSI of the called user.

The obtaining module 52 is configured to query an NPDB according to the identifier of the called user to obtain routing information of the called user, where the routing information may include: an RN ported into a present network from an originating network of the called user by the called user, an RN ported out from the present network by the called user, a domain name of an originating domain of the called user, or an IP address of the called user.

The operating module 53 is configured to: according to an NP SLA and the routing information of the called user, perform at least one of the following operations: performing routing on the called user, performing charging on the calling user or the called user, and generating an accounting bill between at least two of a third-party service provider, a present-network operator and an external-network operator.

In the foregoing embodiment, after the receiving module 51 receives the request message sent by the calling user, the obtaining module 52 may query the NPDB according to the identifier of the called user carried in the request message to obtain the routing information of the called user, and then, the operating module 53 may perform, according to the NP SLA and the routing information of the called user, at least one of the following operations: performing routing on the called user, performing charging on the calling user or the called user, and generating the accounting bill between at least two of the third-party service provider, the present-network operator and the external-network operator, thereby screening an application layer network and the Internet from the influence of the NP, and further implementing accurate charging, routing or accounting on services.

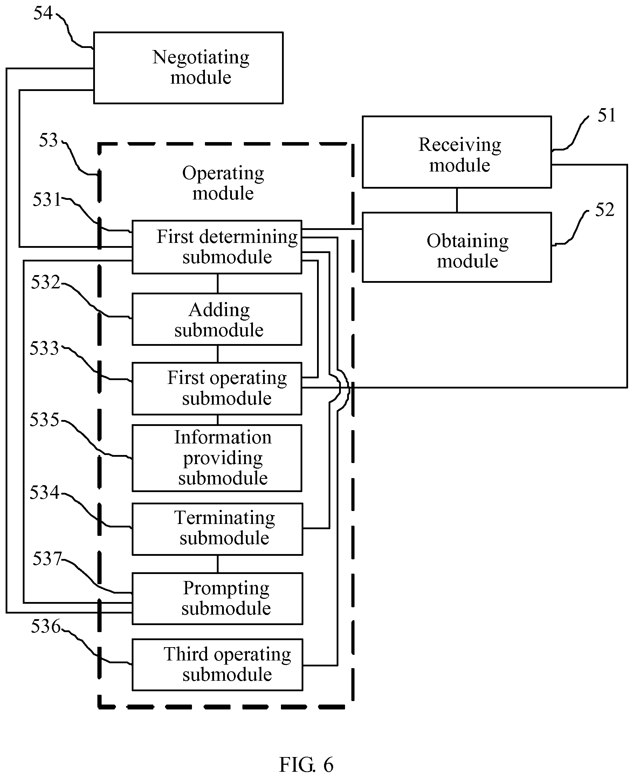

FIG. 6 is a schematic structural diagram of another embodiment of an interconnecting and interworking gateway according to the present invention. The interconnecting and interworking gateway in this embodiment may implement the flow of the embodiment of the present invention shown in FIG. 1 or FIG. 3. Compared with the interconnecting and interworking gateway shown in FIG. 5, the difference lies in that the interconnecting and interworking gateway shown in FIG. 6 may further include:
a negotiating module 54, configured to negotiate an NP SLA with a calling user.

Specifically, in the interconnecting and interworking gateway shown in FIG. 6, the operating module 53 may include:
a first determining submodule 531, configured to: according to routing information of a called user obtained by the obtaining module 52, determine that the called user ports in from an originating network of the called user or ports out from a present network;
an adding submodule 532, configured to: after the first determining submodule 531 determines that the called user ports out from the present network, add an RN ported out from the present network by the called user, a domain name of an originating domain of the called user or an IP address of the called user to an identifier of the called user; and
a first operating submodule 533, configured to: after the adding submodule 532 adds the RN ported out from the present network by the called user, the domain name of the originating domain of the called user or the IP address of the called user to the identifier of the called user, and the first determining submodule 531 determines that a processing policy based on the NP SLA allows the calling user to send a service request message to a called user of an external network, perform routing on the called user according to the RN ported out from the present network by the called user, the domain name of the originating domain of the called user, or the IP address of the called user; and generate an accounting bill between at least two of a third-party service provider, a present-network operator and an external-network operator.

Specifically, the first operating submodule 533 may forward the service request message received by the receiving module 51 to an interconnecting and interworking gateway of the external network, and carry the RN ported out from the present network by the called user, the domain name of the originating domain of the called user or the IP address of the called user in the forwarded service request message, where the interconnecting and interworking gateway of the external network may be an SMS gateway of the external network; and return a message sending result report to the calling user.

Further, the operating module 53 may further include:
a terminating submodule 534, configured to: after the first determining submodule 531 determines that the processing policy based on the NP SLA prohibits the calling user from sending the service request message to the called user of the external network and determines, according to the routing information of the called user, that the called user ports out from the present network, terminate the procedure of sending the service request message.

Further, after the first determining submodule 531 determines that the called user ports into the present network from the originating network of the called user, the adding submodule 532 may preferably add the RN ported into the present network from the originating network of the called user by the called user, the domain name of the originating domain of the called user or the IP address of the called user to the identifier of the called user.

After the first determining submodule 531 determines that the processing policy based on the NP SLA allows the calling user to send the service request message to the called user of the present network and determines, according to the routing information of the called user, that the called user ports into the present network from the originating network of the called user, the first operating submodule 533 may perform routing on the called user according to the RN ported into the present network from the originating network of the called user by the called user, the domain name of the originating domain of the called user or the IP address of the called user, and generate the accounting bill between at least two of the third-party service provider, the present-network operator and the external-network operator.

Specifically, the first operating submodule 533 may send the service request message received by the receiving module 51 to a network element of a core network of the present network via a service component, and carry the RN ported into the present network from the originating network of the called user by the called user, the domain name of the originating domain of the called user or the IP address of the called user in the sent service request message.

Further, the operating module 53 may further include:
an information providing submodule 535, configured to: when sending the service request message fails, prompt appropriate routing information of the called user to the calling user.

Further, the operating module 53 may further include:
a third operating submodule 536, configured to: when the calling user is a regular user of the present network, an Internet user of the present network, a third-party service provider of the present network or a group user of the present network, and after the first determining submodule 531 determines that the processing policy based on the NP SLA allows the calling user to send the service request message to the called user of the present network or the called user of the external network, perform, according to the routing information of the called user, a charging operation with a charging system of an operator to which the calling user belongs and carry the routing information of the called user in information exchanged with the charging system of the operator to which the calling user belongs.

In addition, after the first determining submodule 531 determines, according to the routing information of the called user, that the called user ports into the present network from the originating network of the called user, the third operating submodule 536 may further perform, according to the routing information of the called user, a charging operation with a charging system of an operator to which the called user belongs, and carry the routing information of the called user in information exchanged with the charging system of the operator to which the called user belongs.

Further, the operating module 53 may further include:
a prompting submodule 537, configured to: when the negotiating module 54 negotiates with the calling user to determine to perform a confirmation prompt policy in the NP SLA, and after the first determining submodule 531 determines, according to the routing information of the called user, that the called user ports into the present network from the originating network of the called user or ports out from the present network, perform prompt and confirmation to the calling user according to the confirmation prompt policy; where the terminating submodule 534 may further terminate the procedure of sending the service request message when the calling user refuses to perform a prompted provision; and when the calling user agrees to perform the prompted provision, the first operating submodule 533 may perform routing on the called user and execute the subsequent steps.

The foregoing interconnecting and interworking gateway can screen an application layer network and the Internet from the influence of the NP, and implement accurate charging, routing or accounting on services.

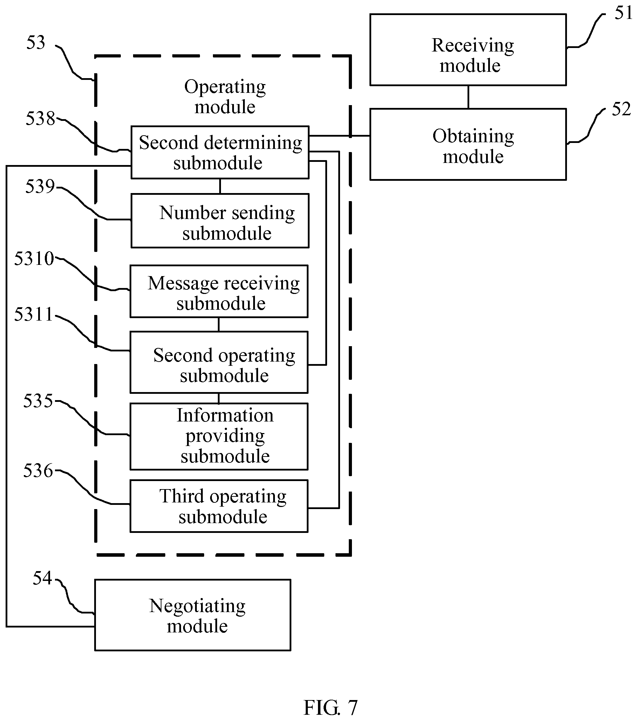

FIG. 7 is a schematic structural diagram of another embodiment of an interconnecting and interworking gateway according to the present invention. The interconnecting and interworking gateway in this embodiment may implement the flow of the embodiment of the present invention shown in FIG. 1 or FIG. 4. Compared with the interconnecting and interworking gateway shown in FIG. 5, the difference lies in that the interconnecting and interworking gateway shown in FIG. 7 may further include:
a negotiating module 54, configured to negotiate the NP SLA with a calling user.

Specifically, in this embodiment, the operating module 53 may include:
a second determining submodule 538, configured to: according to routing information of a called user obtained by the obtaining module 52, determine that the called user ports into a present network from an originating network of the called user or ports out from the present network;
a number sending submodule 539, configured to: after the second determining submodule 538 determines that the called user ports into the present network from the originating network of the called user, send an RN ported into the present network from the originating network of the called user by the called user, a domain name of an originating domain of the called user or an IP address of the called user to the calling user;
a message receiving submodule 5310, configured to receive the service request message which is sent by the calling user according to the RN ported into the present network from the originating network of the called user by the called user, the domain name of the originating domain of the called user or the IP address of the called user, where the service request message carries the RN ported into the present network from the originating network of the called user by the called user, the domain name of the originating domain of the called user or the IP address of the called user; and
a second operating submodule 5311, configured to: after the second determining submodule 538 determines that a processing policy based on an NP SLA allows the calling user to send the service request message to the called user of the present network and determines, according to the routing information of the called user, that the called user ports into the present network from the originating network of the called user, perform routing on the called user according to the RN ported into the present network from the originating network of the called user by the called user, the domain name of the originating domain of the called user or the IP address of the called user, and generate an accounting bill between at least two of a third-party service provider, a present-network operator and an external-network operator.

Specifically, the second operating submodule 5311 may send the service request message received by the message receiving submodule 5310 to a network element of a core network of the present network via a service component, and carry the RN ported into the present network from the originating network of the called user by the called user, the domain name of the originating domain of the called user or the IP address of the called user in the sent service request message; and return a message sending result report to the calling user.

Further, after the second determining submodule 538 determines that the called user ports out from the present network, the number sending submodule 539 may further send the RN ported out from the present network by the called user, the domain name of the originating domain of the called user or the IP address of the called user to the calling user, so that the calling user may send the service request message to an interconnecting and interworking gateway of an external network according to the RN ported out from the present network by the called user, the domain name of the originating domain of the called user or the IP address of the called user, and carry the RN ported out from the present network by the called user, the domain name of the originating domain of the called user or the IP address of the called user in the sent service request message.

Further, in this embodiment, the operating module 53 may further include:
an information providing submodule 535, configured to: when sending the service request message fails, prompt appropriate routing information of the called user to the calling user.

Further, the operating module 53 may further include:
a third operating submodule 536, configured to: when the calling user is a regular user of the present network, an Internet user of the present network, a third-party service provider of the present network or a group user of the present network, and after the second determining submodule 538 determines that the processing policy based on the NP SLA allows the calling user to send the service request message to the called user of the present network or the called user of the external network, perform, according to the routing information of the called user, a charging operation with a charging system of an operator to which the calling user belongs and carry the routing information of the called user in information exchanged with the charging system of the operator to which the calling user belongs.

In addition, after the second determining submodule 538 determines, according to the routing information of the called user, that the called user ports into the present network from the originating network of the called user, the third operating submodule 536 may further perform, according to the routing information of the called user, a charging operation with a charging system of an operator to which the called user belongs, and carry the routing information of the called user in information exchanged with the charging system of the operator to which the called user belongs.

The foregoing interconnecting and interworking gateway may screen an application layer network and the Internet from the influence of the NP, and may implement accurate charging, routing or accounting on services.

Persons skilled in the art should understand that the modules in the apparatus provided in an embodiment may be arranged in the apparatus in a distributed manner according to the description of the embodiment, or may be arranged in one or more apparatuses which are different from that described in the embodiment. The modules in the above embodiment may be combined into one module, or split into multiple submodules.

The above embodiments are merely intended for describing the technical solutions of the present invention other than limiting the present invention. Although the present invention is described in detail with reference to the foregoing embodiments, persons of ordinary skill in the art should understand that they can still make modifications to the technical solutions described in the foregoing embodiments or make equivalent substitutions to some technical features thereof, and such modifications or substitutions cannot make the essence of the corresponding technical solutions depart from scope of the technical solutions of the embodiments of the present invention.

## Claims

1. A number portability realization method, comprising:
A. receiving(101), by an interconnecting and interworking gateway, a request message sent by a calling user, wherein the request message carries an identifier of a called user, and the calling user comprises a regular user, an Internet user, a third-party service provider or a group user of a present network or an external network, wherein the interconnecting and interworking gateway is a Parlay X gateway or a SDP;
B. querying(102) a number portability database according to the identifier of the called user to obtain routing information of the called user, wherein the routing information comprises: a routed number ported into the present network from an originating network of the called user by the called user, a routed number ported out from the present network by the called user, a domain name of an originating domain of the called user, or an Internet protocol address of the called user; and
C. performing(103), according to a number portability service level agreement(NP SLA) and the routing information of the called user, at least one of the following operations: performing routing on the called user, performing charging on the calling user or the called user, and generating an accounting bill between at least two of the third-party service provider, a present-network operator and an external-network operator, wherein a policy based on the NP SLA include three operations and tariffs corresponding to the three operations, the three operations comprise: "prohibit sending", "permitted to send" or "confirmation prompt".

2. The method according to claim 1, wherein before step C, the method further comprises:
negotiating, by the interconnecting and interworking gateway, the number portability service level agreement with the calling user.

3. The method according to claim 1 or 2, wherein the request message comprises a service request message; and step C further comprises:
after the interconnecting and interworking gateway determines, according to the routing information of the called user, that the called user ports out, adding the routed number ported out from the present network by the called user, the domain name of the originating domain of the called user or the Internet protocol address of the called user to the identifier of the called user.

4. The method according to claim 3, wherein the performing routing on the called user comprises:
forwarding, by the interconnecting and interworking gateway, the service request message to an interconnecting and interworking gateway of the external network, and carrying the routed number ported out from the present network by the called user, the domain name of the originating domain of the called user or the Internet protocol address of the called user in the forwarded service request message; and
returning, by the interconnecting and interworking gateway, a message sending result report to the calling user.

5. The method according to claim 3, wherein step C further comprises:
if the interconnecting and interworking gateway determines that a processing policy based on the number portability service level agreement allows the calling user to send the service request message to a called user of the external network, performing routing on the called user according to the routed number ported out from the present network by the called user, the domain name of the originating domain of the called user or the Internet protocol address of the called user, and generating the accounting bill between at least two of the third-party service provider, the present-network operator and the external-network operator; or
if the interconnecting and interworking gateway determines that a processing policy based on the number portability service level agreement prohibits the calling user from sending the service request message to a called user of the external network, terminating a procedure of sending the service request message.

6. The method according to claim 1 or 2, wherein the request message comprises a service request message; and step C comprises:
if the interconnecting and interworking gateway determines that a processing policy based on the number portability service level agreement allows the calling user to send the service request message to the called user of the present network and determines, according to the routing information of the called user, that the called user ports into the present network from the originating network of the called user, performing routing on the called user according to the routed number ported into the present network from the originating network of the called user by the called user, the domain name of the originating domain of the called user or the Internet protocol address of the called user, and generating the accounting bill between at least two of the third-party service provider, the present-network operator and the external-network operator.

7. The method according to claim 6, wherein the performing routing on the called user comprises:
sending, by the interconnecting and interworking gateway, the service request message to a network element of a core network of the present network via a service component, and carrying the routed number ported into the present network from the originating network of the called user by the called user, the domain name of the originating domain of the called user or the Internet protocol address of the called user in the sent service request message; and
returning, by the interconnecting and interworking gateway, a message sending result report to the calling user.

8. The method according to any one of claims 1 to 7, wherein before the performing routing on the called user, the method further comprises:
if the processing policy based on the number portability service level agreement needs the interconnecting and interworking gateway to perform a confirmation prompt policy, after the interconnecting and interworking gateway determines, according to the routing information of the called user, that the called user ports in or ports out, performing, according to the confirmation prompt policy, prompt and confirmation to the calling user, wherein if the calling user agrees to perform a prompted provision, the interconnecting and interworking gateway performs routing on the called user and executes subsequent steps, if the calling user refuses to perform a prompted provision, the interconnecting and interworking gateway terminates the procedure of sending the service request message.

9. The method according to claim 1 or 2, wherein the request message comprises a number portability query request message; and
step C comprises:
after the interconnecting and interworking gateway determines, according to the routing information of the called user, that the called user ports into the present network from the originating network of the called user, sending the routed number ported into the present network from the originating network of the called user by the called user, the domain name of the originating domain of the called user or the Internet protocol address of the called user to the calling user, and receiving a service request message sent by the calling user, wherein the service request message carries the routed number ported in from the originating network of the called user, the domain name of the originating domain of the called user or the Internet protocol address of the called user; and
after the interconnecting and interworking gateway determines that a processing policy based on the number portability service level agreement allows the calling user to send the service request message to the called user of the present network and determines, according to the routing information of the called user, that the called user ports into the present network from the originating network of the called user, performing routing on the called user according to the routed number ported in from the originating network of the called user by the called user, the domain name of the originating domain of the called user or the Internet protocol address of the called user, and generating the accounting bill between at least two of the third-party service provider, the present-network operator and the external-network operator.

10. The method according to claim 9, wherein the performing routing on the called user comprises:
sending, by the interconnecting and interworking gateway, the service request message to a network element of a core network of the present network via a service component, and carrying the routed number ported in from the originating network of the called user by the called user, the domain name of the originating domain of the called user or the Internet protocol address of the called user in the sent service request message; and
returning, by the interconnecting and interworking gateway, a message sending result report to the calling user.

11. The method according to claim 1 or 2, wherein the request message comprises a number portability query request message; and
step C comprises:
after the interconnecting and interworking gateway determines, according to the routing information of the called user, that the called user ports out from the present network, sending the routed number ported out from the present network by the called user, the domain name of the originating domain of the called user or the Internet protocol address of the called user to the calling user, so that the calling user sends a service request message to an interconnecting and interworking gateway of the external network, wherein the service request message carries the routed number ported out from the present network by the called user, the domain name of the originating domain of the called user or the Internet protocol address of the called user.

12. The method according to claim 4, 7, 10 or 11, further comprising:
when sending the service request message fails, prompting, by the interconnecting and interworking gateway, appropriate routing information of the called user to the calling user.

13. The method according to any one of claims 1 to 12, further comprising:
when the calling user is a regular user of the present network, an Internet user of the present network, a third-party service provider of the present network or a group user of the present network, and after the interconnecting and interworking gateway determines that the processing policy based on the number portability service level agreement allows the calling user to send the service request message to the called user of the present network or the called user of the external network, performing a charging operation with a charging system of an operator to which the calling user belongs according to the routing information of the called user and carrying the routing information of the called user in information exchanged with the charging system of the operator to which the calling user belongs.

14. The method according to any one of claims 1 to 12, further comprising:
after determining, according to the routing information of the called user, that the called user ports into the present network from the originating network of the called user, performing, by the interconnecting and interworking gateway, a charging operation with a charging system of an operator to which the called user belongs according to the routing information of the called user, and carrying the routing information of the called user in information exchanged with the charging system of the operator to which the called user belongs.

15. An interconnecting and interworking gateway, comprising:
a receiving module(51), configured to receive a request message sent by a calling user, wherein the request message carries an identifier of a called user, and the calling user comprises a regular user, an Internet user, a third-party service provider or a group user of a present network or an external network;
an obtaining module(52), configured to query a number portability database according to the identifier of the called user to obtain routing information of the called user, wherein the routing information comprises: a routed number ported into the present network from an originating network of the called user by the called user, a routed number ported out from the present network by the called user, a domain name of an originating domain of the called user, or an Internet protocol address of the called user; and
an operating module(53), configured to: according to a number portability service level agreement and the routing information of the called user, perform at least one of the following operations: performing routing on the called user, performing charging on the calling user or the called user, and generating an accounting bill between at least two of the third-party service provider, a present-network operator and an external-network operator, wherein a policy based on the NP SLA include three operations and tariffs corresponding to the three operations, the three operations comprise: "prohibit sending", "permitted to send" or "confirmation prompt".

16. The gateway according to claim 15, further comprising:
a negotiating module(54), configured to negotiate the number portability service level agreement with the calling user.

17. The gateway according to claim 16, wherein the operating module comprises:
a first determining submodule, configured to: according to the routing information of the called user obtained by the obtaining module, determine that the called user ports into the present network from the originating network of the called user or ports out from the present network;
an adding submodule, configured to: after the first determining submodule determines that the called user ports out from the present network, add the routed number ported out from the present network by the called user, the domain name of the originating domain of the called user, or the Internet protocol address of the called user to the identifier of the called user; and
a first operating submodule, configured to: after the adding submodule adds the routed number ported out from the present network by the called user, the domain name of the originating domain of the called user or the Internet protocol address of the called user to the identifier of the called user, and the first determining submodule determines that a processing policy based on the number portability service level agreement allows the calling user to send a service request message to a called user of the external network, perform routing on the called user according to the routed number ported out from the present network by the called user, the domain name of the originating domain of the called user or the Internet protocol address of the called user, and generate the accounting bill between at least two of the third-party service provider, the present-network operator and the external-network operator.

18. The gateway according to claim 17, wherein
the first operating submodule specifically is configured to forward the service request message received by the receiving module to an interconnecting and interworking gateway of the external network, and carry the routed number ported out from the present network by the called user, the domain name of the originating domain of the called user or the Internet protocol address of the called user in the forwarded service request message, and return a message sending result report to the calling user.

19. The gateway according to claim 18, wherein the operating module further comprises:
a terminating submodule, configured to: after the first determining submodule determines that the processing policy based on the number portability service level agreement prohibits the calling user from sending the service request message to the called user of the external network, and determines, according to the routing information of the called user, that the called user ports out from the present network, terminate a procedure of sending the service request message.

20. The gateway according to claim 19, wherein
the first operating submodule is further configured to: after the first determining submodule determines that the processing policy based on the number portability service level agreement allows the calling user to send the service request message to the called user of the present network and determines, according to the routing information of the called user, that the called user ports into the present network from the originating network of the called user, perform routing on the called user according to the routed number ported into the present network from the originating network of the called user by the called user, the domain name of the originating domain of the called user or the Internet protocol address of the called user, and generate the accounting bill between at least two of the third-party service provider, the present-network operator and the external-network operator.

21. The gateway according to claim 20, wherein
the first operating submodule specifically is configured to send the service request message received by the receiving module to a network element of a core network of the present network via a service component, and carry the routed number ported into the present network from the originating network of the called user by the called user, the domain name of the originating domain of the called user or the Internet protocol address of the called user in the sent service request message.

22. The gateway according to claim 19 or 21, wherein the operating module further comprises:
a prompting submodule, configured to: when the negotiating module negotiates with the calling user to determine to perform a confirmation prompt policy in the number portability service level agreement, and after the first determining submodule determines, according to the routing information of the called user, that the called user ports into the present network from the originating network of the called user or ports out from the present network, perform prompt and confirmation to the calling user according to the confirmation prompt policy;
wherein the terminating submodule is further configured to: when the calling user refuses to perform a prompted provision, terminate the procedure of sending the service request message.

23. The gateway according to claim 16, wherein the operating module comprises:
a second determining submodule, configured to: according to the routing information of the called user obtained by the obtaining module, determine that the called user ports into the present network from the originating network of the called user or ports out from the present network;
a number sending submodule, configured to: after the second determining submodule determines that the called user ports into the present network from the originating network of the called user, send the routed number ported into the present network from the originating network of the called user by the called user, the domain name of the originating domain of the called user or the Internet protocol address of the called user to the calling user;
a message receiving submodule, configured to receive a service request message which is sent by the calling user according to the routed number ported into the present network from the originating network of the called user by the called user, the domain name of the originating domain of the called user or the Internet protocol address of the called user, wherein the service request message carries the routed number ported in from the originating network of the called user by the called user, the domain name of the originating domain of the called user or the Internet protocol address of the called user; and
a second operating submodule, configured to: after the second determining submodule determines that a processing policy based on the number portability service level agreement allows the calling user to send the service request message to the called user of the present network and determines, according to the routing information of the called user, that the called user ports into the present network from the originating network of the called user, perform routing on the called user according to the routed number ported in from the originating network of the called user by the called user, the domain name of the originating domain of the called user or the Internet protocol address of the called user, and generate the accounting bill between at least two of the third-party service provider, the present-network operator and the external-network operator.

24. The gateway according to claim 23, wherein
the second operating submodule specifically is configured to send the service request message received by the message receiving submodule to a network element of a core network of the present network via a service component, and carry the routed number ported in from the originating network of the called user by the called user, the domain name of the originating domain of the called user or the Internet protocol address of the called user in the sent service request message, and return a message sending result report to the calling user.

25. The gateway according to claim 23, wherein
the number sending submodule is further configured to: after the second determining submodule determines that the called user ports out from the present network, send the routed number ported out from the present network by the called user, the domain name of the originating domain of the called user or the Internet protocol address of the called user to the calling user, so that the calling user sends the service request message to an interconnecting and interworking gateway of the external network according to the routed number ported out from the present network by the called user, the domain name of the originating domain of the called user or the Internet protocol address of the called user, and carries the routed number ported out from the present network by the called user, the domain name of the originating domain of the called user or the Internet protocol address of the called user in the sent service request message.

26. The gateway according to claim 17, 20 or 23, wherein the operating module further comprises:
a third operating submodule, configured to: when the calling user is a regular user of the present network, an Internet user of the present network, a third-party service provider of the present network or a group user of the present network, and after it is determined that the processing policy based on the number portability service level agreement allows the calling user to send the service request message to the called user of the present network or the called user of the external network, perform a charging operation with a charging system of an operator to which the calling user belongs according to the routing information of the called user and carry the routing information of the called user in information exchanged with the charging system.

27. The gateway according to claim 18, 21 or 24, wherein the operating module further comprises:
an information providing submodule, configured to: when sending the service request message fails, prompt appropriate routing information of the called user to the calling user.

## Patentansprüche

1. Verfahren zum Realisieren einer Nummernportabilität, umfassend:
A. Empfangen (101), durch ein Vernetzungs- und Zusammenarbeitsgateway, einer durch einen anrufenden Benutzer gesandten Anforderungsnachricht, wobei die Anforderungsnachricht eine Kennung eines angerufenen Benutzers trägt und der anrufende Benutzer einen regulären Benutzer, einen Internetbenutzer, einen fremden Dienstanbieter oder einen Gruppenbenutzer eines gegenwärtigen Netzwerks oder eines externen Netzwerks umfasst, wobei das Vernetzungs- und Zusammenarbeitsgateway ein Parlay-X-Gateway oder ein SDP ist;
B. Anfragen (102) bei einer Nummernportabilität-Datenbank gemäß der Kennung des angerufenen Benutzers, um Leitweginformationen des angerufenen Benutzers zu erhalten, wobei die Leitweginformationen umfassen: eine weitergeleitete Nummer, portiert in das gegenwärtige Netzwerk aus einem Ursprungsnetzwerk des angerufenen Benutzers durch den angerufenen Benutzer, eine weitergeleitete Nummer, portiert aus dem gegenwärtigen Netzwerk durch den angerufenen Benutzer, einen Domänennamen einer Ursprungsdomäne des angerufenen Benutzers oder eine Internetprotokolladresse des angerufenen Benutzers; und
C. Durchführen (103), gemäß einer Nummernportabilität-Dienstniveau-Übereinkunft (NP SLA) und den Leitweginformationen des angerufenen Benutzers, mindestens eines der folgenden Betriebsvorgänge: Durchführen von Leitweglenkung an dem angerufenen Benutzer, Durchführen von Gebührenberechnung an dem anrufenden Benutzer oder dem angerufenen Benutzer und Erzeugen einer Buchführungsrechnung zwischen mindestens zwei des fremden Dienstanbieters, eines Betreibers des gegenwärtigen Netzwerks und eines Betreibers des externen Netzwerks, wobei eine auf der NP SLA basierende Richtlinie drei Betriebsvorgänge und mit den drei Betriebsvorgängen korrespondierende Tarife enthält, die drei Betriebsvorgänge umfassend: "Senden verboten", "Senden gestattet" oder "Bestätigungsaufforderung".

2. Verfahren nach Anspruch 1, wobei das Verfahren vor Schritt C ferner umfasst:
Aushandeln, durch das Vernetzungs- und Zusammenarbeitsgateway, der Nummernportabilität-Dienstniveau-Übereinkunft mit dem anrufenden Benutzer.

3. Verfahren nach Anspruch 1 oder 2, wobei die Anforderungsnachricht eine Dienstanforderungsnachricht umfasst; und Schritt C ferner umfasst:
nachdem das Vernetzungs- und Zusammenarbeitsgateway gemäß den Leitweginformationen des angerufenen Benutzers bestimmt, dass der angerufene Benutzer heraus portiert, Hinzufügen der durch den angerufenen Benutzer aus dem gegenwärtigen Netzwerk portierten weitergeleiteten Nummer, des Domänennamens der Ursprungsdomäne des angerufenen Benutzers oder der Internetprotokolladresse des angerufenen Benutzers zu der Kennung des angerufenen Benutzers.

4. Verfahren nach Anspruch 3, wobei das Durchführen von Leitweglenkung an dem angerufenen Benutzer umfasst:
Übermitteln, durch das Vernetzungs- und Zusammenarbeitsgateway, der Dienstanforderungsnachricht an ein Vernetzungs- und Zusammenarbeitsgateway des externen Netzwerks und Tragen der durch den angerufenen Benutzer aus dem gegenwärtigen Netzwerk portierten weitergeleiteten Nummer, des Domänennamens der Ursprungsdomäne des angerufenen Benutzers oder der Internetprotokolladresse des angerufenen Benutzers in der übermittelten Dienstanforderungsnachricht; und
Zurücksenden, durch das Vernetzungs- und Zusammenarbeitsgateway, eines Nachrichtensendung-Ergebnisberichts an den anrufenden Benutzer.

5. Verfahren nach Anspruch 3, wobei Schritt C ferner umfasst:
wenn das Vernetzungs- und Zusammenarbeitsgateway bestimmt, dass eine auf der Nummernportabilität-Dienstniveau-Übereinkunft basierende Verarbeitungsrichtlinie dem anrufenden Benutzer gestattet, die Dienstanforderungsnachricht an einen angerufenen Benutzer des externen Netzwerks zu senden, Durchführen von Leitweglenkung an dem angerufenen Benutzer gemäß der durch den angerufenen Benutzer aus dem gegenwärtigen Netzwerk portierten weitergeleiteten Nummer, dem Domänennamen der Ursprungsdomäne des angerufenen Benutzers oder der Internetprotokolladresse des angerufenen Benutzers und Erzeugen der Buchführungsrechnung zwischen mindestens zwei des fremden Dienstanbieters, des Betreibers des gegenwärtigen Netzwerks und des Betreibers des externen Netzwerks; oder
wenn das Vernetzungs- und Zusammenarbeitsgateway bestimmt, dass eine auf der Nummernportabilität-Dienstniveau-Übereinkunft basierende Verarbeitungsrichtlinie dem anrufenden Benutzer verbietet, die Dienstanforderungsnachricht an einen angerufenen Benutzer des externen Netzwerks zu senden, Beenden einer Prozedur des Sendens der Dienstanforderungsnachricht.

6. Verfahren nach Anspruch 1 oder 2, wobei die Anforderungsnachricht eine Dienstanforderungsnachricht umfasst; und Schritt C umfasst:
wenn das Vernetzungs- und Zusammenarbeitsgateway bestimmt, dass eine auf der Nummernportabilität-Dienstniveau-Übereinkunft basierende Verarbeitungsrichtlinie dem anrufenden Benutzer gestattet, die Dienstanforderungsnachricht an den angerufenen Benutzer des gegenwärtigen Netzwerks zu senden, und gemäß den Leitweginformationen des angerufenen Benutzers bestimmt, dass der angerufene Benutzer aus dem Ursprungsnetzwerk des angerufenen Benutzers in das gegenwärtige Netzwerk portiert, Durchführen von Leitweglenkung an dem angerufenen Benutzer gemäß der durch den angerufenen Benutzer aus dem Ursprungsnetzwerk des angerufenen Benutzers heraus in das gegenwärtige Netzwerk portierten weitergeleiteten Nummer, dem Domänennamen der Ursprungsdomäne des angerufenen Benutzers oder der Internetprotokolladresse des angerufenen Benutzers und Erzeugen der Buchführungsrechnung zwischen mindestens zwei des fremden Dienstanbieters, des Betreibers des gegenwärtigen Netzwerks und des Betreibers des externen Netzwerks.

7. Verfahren nach Anspruch 6, wobei das Durchführen von Leitweglenkung an dem angerufenen Benutzer umfasst:
Senden, durch das Vernetzungs- und Zusammenarbeitsgateway, der Dienstanforderungsnachricht über eine Dienstkomponente an ein Netzwerkelement eines Kernnetzwerks des gegenwärtigen Netzwerks und Tragen der durch den angerufenen Benutzer aus dem Ursprungsnetzwerk des angerufenen Benutzers in das gegenwärtige Netzwerk portierten weitergeleiteten Nummer, des Domänennamens der Ursprungsdomäne des angerufenen Benutzers oder der Internetprotokolladresse des angerufenen Benutzers in der gesandten Dienstanforderungsnachricht; und
Zurücksenden, durch das Vernetzungs- und Zusammenarbeitsgateway, eines Nachrichtensendung-Ergebnisberichts an den anrufenden Benutzer.

8. Verfahren nach einem der Ansprüche 1 bis 7, wobei das Verfahren vor dem Durchführen von Leitweglenkung an den angerufenen Benutzer ferner umfasst:
wenn die auf der Nummernportabilität-Dienstniveau-Übereinkunft basierende Verarbeitungsrichtlinie erfordert, dass das Vernetzungs- und Zusammenarbeitsgateway eine Bestätigungsaufforderungsrichtlinie durchführt, nachdem das Vernetzungs- und Zusammenarbeitsgateway gemäß den Leitweginformationen des angerufenen Benutzers bestimmt, dass der angerufene Benutzer herein portiert oder heraus portiert, Durchführen, gemäß der Bestätigungsaufforderungsrichtlinie, von Aufforderung und Bestätigung für den anrufenden Benutzer, wobei, wenn der anrufende Benutzer zustimmt, eine aufgeforderte Bereitstellung durchzuführen, das Vernetzungs- und Zusammenarbeitsgateway Leitweglenkung an dem angerufenen Benutzer durchführt und anschließende Schritte ausführt, wenn der anrufende Benutzer verweigert, eine aufgeforderte Bereitstellung durchzuführen, das Vernetzungs- und Zusammenarbeitsgateway die Prozedur des Sendens der Dienstanforderungsnachricht beendet.

9. Verfahren nach Anspruch 1 oder 2, wobei die Anforderungsnachricht eine Nummernportabilität-Anfrageanforderungsnachricht umfasst; und
Schritt C umfasst:
nachdem das Vernetzungs- und Zusammenarbeitsgateway gemäß den Leitweginformationen des angerufenen Benutzers bestimmt, dass der angerufene Benutzer aus dem Ursprungsnetzwerk des angerufenen Benutzers in das gegenwärtige Netzwerk portiert, Senden der durch den angerufenen Benutzer aus dem Ursprungsnetzwerk des angerufenen Benutzers in das gegenwärtige Netzwerk portierten weitergeleiteten Nummer, des Domänennamens der Ursprungsdomäne des angerufenen Benutzers oder der Internetprotokolladresse des angerufenen Benutzers an den anrufenden Benutzer und Empfangen einer durch den anrufenden Benutzer gesandten Dienstanforderungsnachricht, wobei die Dienstanforderungsnachricht die aus dem Ursprungsnetzwerk des angerufenen Benutzers herein portierte weitergeleitete Nummer, den Domänennamen der Ursprungsdomäne des angerufenen Benutzers oder die Internetprotokolladresse des angerufenen Benutzers trägt; und
nachdem das Vernetzungs- und Zusammenarbeitsgateway bestimmt, dass eine auf der Nummernportabilität-Dienstniveau-Übereinkunft basierende Verarbeitungsrichtlinie dem anrufenden Benutzer gestattet, die Dienstanforderungsnachricht an den angerufenen Benutzer des gegenwärtigen Netzwerks zu senden, und gemäß den Leitweginformationen des angerufenen Benutzers bestimmt, dass der angerufene Benutzer aus dem Ursprungsnetzwerk des angerufenen Benutzers in das gegenwärtige Netzwerk portiert, Durchführen von Leitweglenkung an dem angerufenen Benutzer gemäß der durch den angerufenen Benutzer aus dem Ursprungsnetzwerk des angerufenen Benutzers herein portierten weitergeleiteten Nummer, dem Domänennamen der Ursprungsdomäne des angerufenen Benutzers oder der Internetprotokolladresse des angerufenen Benutzers und Erzeugen der Buchführungsrechnung zwischen mindestens zwei des fremden Dienstanbieters, des Betreibers des gegenwärtigen Netzwerks und des Betreibers des externen Netzwerks.

10. Verfahren nach Anspruch 9, wobei das Durchführen von Leitweglenkung an dem angerufenen Benutzer umfasst:
Senden, durch das Vernetzungs- und Zusammenarbeitsgateway, der Dienstanforderungsnachricht über eine Dienstkomponente an ein Netzwerkelement eines Kernnetzwerks des gegenwärtigen Netzwerks und Tragen der durch den angerufenen Benutzer aus dem Ursprungsnetzwerk des angerufenen Benutzers herein portierten weitergeleiteten Nummer, des Domänennamens der Ursprungsdomäne des angerufenen Benutzers oder der Internetprotokolladresse des angerufenen Benutzers in der gesandten Dienstanforderungsnachricht; und
Zurücksenden, durch das Vernetzungs- und Zusammenarbeitsgateway, eines Nachrichtensendung-Ergebnisberichts an den anrufenden Benutzer.

11. Verfahren nach Anspruch 1 oder 2, wobei die Anforderungsnachricht eine Nummernportabilität-Anfrageanforderungsnachricht umfasst; und
Schritt C umfasst:
nachdem das Vernetzungs- und Zusammenarbeitsgateway gemäß den Leitweginformationen des angerufenen Benutzers bestimmt, dass der angerufene Benutzer aus dem gegenwärtigen Netzwerk portiert, Senden der durch den angerufenen Benutzer aus dem gegenwärtigen Netzwerk portierten weitergeleiteten Nummer, des Domänennamens der Ursprungsdomäne des angerufenen Benutzers oder der Internetprotokolladresse des angerufenen Benutzers an den anrufenden Benutzer, so dass der anrufende Benutzer eine Dienstanforderungsnachricht an ein Vernetzungs- und Zusammenarbeitsgateway des externen Netzwerks sendet, wobei die Dienstanforderungsnachricht die durch den angerufenen Benutzer aus dem gegenwärtigen Netzwerk portierte weitergeleitete Nummer, den Domänennamen der Ursprungsdomäne des angerufenen Benutzers oder die Internetprotokolladresse des angerufenen Benutzers trägt.

12. Verfahren nach Anspruch 4, 7, 10 oder 11, ferner umfassend:
wenn Senden der Dienstanforderungsnachricht fehlschlägt, Auffordern, durch das Vernetzungs- und Zusammenarbeitsgateway, angemessener Leitweginformationen des angerufenen Benutzers für den anrufenden Benutzer.

13. Verfahren nach einem der Ansprüche 1 bis 12, ferner umfassend:
wenn der anrufende Benutzer ein regulärer Benutzer des gegenwärtigen Netzwerks, ein Internetbenutzer des gegenwärtigen Netzwerks, ein fremder Dienstanbieter des gegenwärtigen Netzwerks oder ein Gruppenbenutzer des gegenwärtigen Netzwerks ist, und nachdem das Vernetzungs- und Zusammenarbeitsgateway bestimmt, dass die auf der Nummernportabilität-Dienstniveau-Übereinkunft basierende Verarbeitungsrichtlinie dem anrufenden Benutzer gestattet, die Dienstanforderungsnachricht an den angerufenen Benutzer des gegenwärtigen Netzwerks oder den angerufenen Benutzer des externen Netzwerks zu senden, Durchführen eines Gebührenberechnungsvorgangs mit einem Gebührenberechnungssystem eines Betreibers, zu dem der anrufende Benutzer gemäß den Leitweginformationen des angerufenen Benutzers gehört, und Tragen der Leitweginformationen des angerufenen Benutzers in Informationen, die mit dem Gebührenberechnungssystem des Betreibers, zu dem der anrufende Benutzer gehört, ausgetauscht werden.

14. Verfahren nach einem der Ansprüche 1 bis 12, ferner umfassend:
nach Bestimmen, gemäß den Leitweginformationen des angerufenen Benutzers, dass der angerufene Benutzer aus dem Ursprungsnetzwerk des angerufenen Benutzers in das gegenwärtige Netzwerk portiert, Durchführen, durch das Vernetzungs- und Zusammenarbeitsgateway, eines Gebührenberechnungsvorgangs mit einem Gebührenberechnungssystem eines Betreibers, zu dem der angerufene Benutzer gemäß den Leitweginformationen des angerufenen Benutzers gehört, und Tragen der Leitweginformationen des angerufenen Benutzers in Informationen, die mit dem Gebührenberechnungssystem des Betreibers, zu dem der angerufene Benutzer gehört, ausgetauscht werden.

15. Vernetzungs- und Zusammenarbeitsgateway, umfassend:
ein Empfangsmodul (51), konfiguriert zum Empfangen einer durch einen anrufenden Benutzer gesandten Anforderungsnachricht, wobei die Anforderungsnachricht eine Kennung eines angerufenen Benutzers trägt und der anrufende Benutzer einen regulären Benutzer, einen Internetbenutzer, einen fremden Dienstanbieter oder einen Gruppenbenutzer eines gegenwärtigen Netzwerks oder eines externen Netzwerks umfasst;
ein Erhaltungsmodul (52), konfiguriert zum Anfragen bei einer Nummernportabilität-Datenbank gemäß der Kennung des angerufenen Benutzers, um Leitweginformationen des angerufenen Benutzers zu erhalten, wobei die Leitweginformationen umfassen: eine weitergeleitete Nummer, portiert in das gegenwärtige Netzwerk aus einem Ursprungsnetzwerk des angerufenen Benutzers durch den angerufenen Benutzer, eine weitergeleitete Nummer, portiert aus dem gegenwärtigen Netzwerk durch den angerufenen Benutzer, einen Domänennamen einer Ursprungsdomäne des angerufenen Benutzers oder eine Internetprotokolladresse des angerufenen Benutzers; und
ein Betriebsmodul (53), konfiguriert zum: gemäß einer Nummernportabilität-Dienstniveau-Übereinkunft und den Leitweginformationen des angerufenen Benutzers, Durchführen mindestens eines der folgenden Betriebsvorgänge: Durchführen von Leitweglenkung an dem angerufenen Benutzer, Durchführen von Gebührenberechnung an dem anrufenden Benutzer oder dem angerufenen Benutzer und Erzeugen einer Buchführungsrechnung zwischen mindestens zwei des fremden Dienstanbieters, eines Betreibers des gegenwärtigen Netzwerks und eines Betreibers des externen Netzwerks, wobei eine auf der NP SLA basierende Richtlinie drei Betriebsvorgänge und mit den drei Betriebsvorgängen korrespondierende Tarife enthält, die drei Betriebsvorgänge umfassend: "Senden verboten", "Senden gestattet" oder "Bestätigungsaufforderung".

16. Gateway nach Anspruch 15, ferner umfassend:
ein Aushandlungsmodul (54), konfiguriert zum Aushandeln der Nummernportabilität-Dienstniveau-Übereinkunft mit dem anrufenden Benutzer.

17. Gateway nach Anspruch 16, wobei das Betriebsmodul umfasst:
ein erstes Bestimmungsuntermodul, konfiguriert zum: Bestimmen, gemäß den Leitweginformationen des angerufenen Benutzers, erhalten durch das Erhaltungsmodul, dass der angerufene Benutzer aus dem Ursprungsnetzwerk des angerufenen Benutzers in das gegenwärtige Netzwerk portiert oder aus dem gegenwärtigen Netzwerk portiert;
ein Hinzufügungsuntermodul, konfiguriert zum: nachdem das erste Bestimmungsuntermodul bestimmt, dass der angerufene Benutzer aus dem gegenwärtigen Netzwerk portiert, Hinzufügen der durch den angerufenen Benutzer aus dem gegenwärtigen Netzwerk portierten weitergeleiteten Nummer, des Domänennamens der Ursprungsdomäne des angerufenen Benutzers oder der Internetprotokolladresse des angerufenen Benutzers zu der Kennung des angerufenen Benutzers; und
ein erstes Betriebsuntermodul, konfiguriert zum: nachdem das Hinzufügungsuntermodul die durch den angerufenen Benutzer aus dem gegenwärtigen Netzwerk portierte weitergeleitete Nummer, den Domänennamen der Ursprungsdomäne des angerufenen Benutzers oder die Internetprotokolladresse des angerufenen Benutzers zu der Kennung des angerufenen Benutzers hinzufügt und das erste Bestimmungsuntermodul bestimmt, dass eine auf der Nummernportabilität-Dienstniveau-Übereinkunft basierende Verarbeitungsrichtlinie dem anrufenden Benutzer gestattet, eine Dienstanforderungsnachricht an einen angerufenen Benutzer des externen Netzwerks zu senden, Durchführen von Leitweglenkung an dem angerufenen Benutzer gemäß der durch den angerufenen Benutzer aus dem gegenwärtigen Netzwerk portierten weitergeleiteten Nummer, dem Domänennamen der Ursprungsdomäne des angerufenen Benutzers oder der Internetprotokolladresse des angerufenen Benutzers und Erzeugen der Buchführungsrechnung zwischen mindestens zwei des fremden Dienstanbieters, des Betreibers des gegenwärtigen Netzwerks und des Betreibers des externen Netzwerks.

18. Gateway nach Anspruch 17, wobei
das erste Betriebsuntermodul spezifisch konfiguriert ist zum Übermitteln der durch das Empfangsmodul empfangenen Dienstanforderungsnachricht an ein Vernetzungs- und Zusammenarbeitsgateway des externen Netzwerks und Tragen der durch den angerufenen Benutzer aus dem gegenwärtigen Netzwerk portierten weitergeleiteten Nummer, des Domänennamens der Ursprungsdomäne des angerufenen Benutzers oder der Internetprotokolladresse des angerufenen Benutzers in der übermittelten Dienstanforderungsnachricht und Zurücksenden eines Nachrichtensendung-Ergebnisberichts an den anrufenden Benutzer.

19. Gateway nach Anspruch 18, wobei das Betriebsmodul ferner umfasst:
ein Beendigungsuntermodul, konfiguriert zum: nachdem das erste Bestimmungsuntermodul bestimmt, dass die auf der Nummernportabilität-Dienstniveau-Übereinkunft basierende Verarbeitungsrichtlinie dem anrufenden Benutzer verbietet, die Dienstanforderungsnachricht an den angerufenen Benutzer des externen Netzwerks zu senden, und gemäß den Leitweginformationen des angerufenen Benutzers bestimmt, dass der angerufene Benutzer aus dem gegenwärtigen Netzwerk portiert, Beenden einer Prozedur des Sendens der Dienstanforderungsnachricht.

20. Gateway nach Anspruch 19, wobei
das erste Betriebsuntermodul ferner konfiguriert ist zum: nachdem das erste Bestimmungsuntermodul bestimmt, dass die auf der Nummernportabilität-Dienstniveau-Übereinkunft basierende Verarbeitungsrichtlinie dem anrufenden Benutzer gestattet, die Dienstanforderungsnachricht an den angerufenen Benutzer des gegenwärtigen Netzwerks zu senden, und gemäß den Leitweginformationen des angerufenen Benutzers bestimmt, dass der angerufene Benutzer aus dem Ursprungsnetzwerk des angerufenen Benutzers in das gegenwärtige Netzwerk portiert, Durchführen von Leitweglenkung an dem angerufenen Benutzer gemäß der durch den angerufenen Benutzer aus dem Ursprungsnetzwerk des angerufenen Benutzers in das gegenwärtige Netzwerk portierten weitergeleiteten Nummer, dem Domänennamen der Ursprungsdomäne des angerufenen Benutzers oder der Internetprotokolladresse des angerufenen Benutzers und Erzeugen der Buchführungsrechnung zwischen mindestens zwei des fremden Dienstanbieters, des Betreibers des gegenwärtigen Netzwerks und des Betreibers des externen Netzwerks.

21. Gateway nach Anspruch 20, wobei
das erste Betriebsuntermodul spezifisch konfiguriert ist zum Senden der durch das Empfangsmodul empfangenen Dienstanforderungsnachricht über eine Dienstkomponente an ein Netzwerkelement eines Kernnetzwerks des gegenwärtigen Netzwerks und Tragen der durch den angerufenen Benutzer aus dem Ursprungsnetzwerk des angerufenen Benutzers in das gegenwärtige Netzwerk portierten weitergeleiteten Nummer, des Domänennamens der Ursprungsdomäne des angerufenen Benutzers oder der Internetprotokolladresse des angerufenen Benutzers in der gesandten Dienstanforderungsnachricht.

22. Gateway nach Anspruch 19 oder 21, wobei das Betriebsmodul ferner umfasst:
ein Aufforderungsuntermodul, konfiguriert zum: wenn das Aushandlungsmodul mit dem anrufenden Benutzer aushandelt, zu bestimmen, eine Bestätigungsaufforderungsrichtlinie in der Nummernportabilität-Dienstniveau-Übereinkunft durchzuführen, und nachdem das erste Bestimmungsuntermodul gemäß den Leitweginformationen des angerufenen Benutzers bestimmt, dass der angerufene Benutzer aus dem Ursprungsnetzwerk des angerufenen Benutzers in das gegenwärtige Netzwerk portiert oder aus dem gegenwärtigen Netzwerk portiert, Durchführen von Aufforderung und Bestätigung für den anrufenden Benutzer gemäß der Bestätigungsaufforderungsrichtlinie;
wobei das Beendigungsuntermodul ferner konfiguriert ist zum: wenn der anrufende Benutzer verweigert, eine aufgeforderte Bereitstellung durchzuführen, die Prozedur des Sendens der Dienstanforderungsnachricht zu beenden.

23. Gateway nach Anspruch 16, wobei das Betriebsmodul umfasst:
ein zweites Bestimmungsuntermodul, konfiguriert zum: Bestimmen, gemäß den Leitweginformationen des angerufenen Benutzers, erhalten durch das Erhaltungsmodul, dass der angerufene Benutzer aus dem Ursprungsnetzwerk des angerufenen Benutzers in das gegenwärtige Netzwerk portiert oder aus dem gegenwärtigen Netzwerk portiert;
ein Nummernsendungsuntermodul, konfiguriert zum: nachdem das zweite Bestimmungsuntermodul bestimmt, dass der angerufene Benutzer aus dem Ursprungsnetzwerk des angerufenen Benutzers in das gegenwärtige Netzwerk portiert, Senden der durch den angerufenen Benutzer aus dem Ursprungsnetzwerk des angerufenen Benutzers portierten weitergeleiteten Nummer, des Domänennamens der Ursprungsdomäne des angerufenen Benutzers oder der Internetprotokolladresse des angerufenen Benutzers an den anrufenden Benutzer;
ein Nachrichtenempfangsuntermodul, konfiguriert zum Empfangen einer Dienstanforderungsnachricht, die durch den anrufenden Benutzer gemäß der durch den angerufenen Benutzer aus dem Ursprungsnetzwerk des angerufenen Benutzers in das gegenwärtige Netzwerk portierten weitergeleiteten Nummer, dem Domänennamen der Ursprungsdomäne des angerufenen Benutzers oder der Internetprotokolladresse des angerufenen Benutzers gesandt wird, wobei die Dienstanforderungsnachricht die durch den angerufenen Benutzer aus dem Ursprungsnetzwerk des angerufenen Benutzers herein portierte weitergeleitete Nummer, den Domänennamen der Ursprungsdomäne des angerufenen Benutzers oder die Internetprotokolladresse des angerufenen Benutzers trägt; und
ein zweites Betriebsuntermodul, konfiguriert zum: nachdem das zweite Bestimmungsuntermodul bestimmt, dass eine auf der Nummernportabilität-Dienstniveau-Übereinkunft basierende Verarbeitungsrichtlinie dem anrufenden Benutzer gestattet, die Dienstanforderungsnachricht an den angerufenen Benutzer des gegenwärtigen Netzwerks zu senden, und gemäß den Leitweginformationen des angerufenen Benutzers bestimmt, dass der angerufene Benutzer aus dem Ursprungsnetzwerk des angerufenen Benutzers in das gegenwärtige Netzwerk portiert, Durchführen von Leitweglenkung an dem angerufenen Benutzer gemäß der durch den angerufenen Benutzer aus dem Ursprungsnetzwerk des angerufenen Benutzers herein portierten weitergeleiteten Nummer, dem Domänennamen der Ursprungsdomäne des angerufenen Benutzers oder der Internetprotokolladresse des angerufenen Benutzers und Erzeugen der Buchführungsrechnung zwischen mindestens zwei des fremden Dienstanbieters, des Betreibers des gegenwärtigen Netzwerks und des Betreibers des externen Netzwerks.

24. Gateway nach Anspruch 23, wobei
das zweite Betriebsuntermodul spezifisch konfiguriert ist zum Senden der durch das Nachrichtenempfangsuntermodul empfangenen Dienstanforderungsnachricht über eine Dienstkomponente an ein Netzwerkelement eines Kernnetzwerks des gegenwärtigen Netzwerks und Tragen der durch den angerufenen Benutzer aus dem Ursprungsnetzwerk des angerufenen Benutzers herein portierten weitergeleiteten Nummer, des Domänennamens der Ursprungsdomäne des angerufenen Benutzers oder der Internetprotokolladresse des angerufenen Benutzers in der gesandten Dienstanforderungsnachricht und Zurücksenden eines Nachrichtensendung-Ergebnisberichts an den anrufenden Benutzer.

25. Gateway nach Anspruch 23, wobei
das Nummernsendungsuntermodul ferner konfiguriert ist zum: nachdem das zweite Bestimmungsuntermodul bestimmt, dass der angerufene Benutzer aus dem gegenwärtigen Netzwerk portiert, Senden der durch den angerufenen Benutzer aus dem gegenwärtigen Netzwerk portierten weitergeleiteten Nummer, des Domänennamens der Ursprungsdomäne des angerufenen Benutzers oder der Internetprotokolladresse des angerufenen Benutzers an den anrufenden Benutzer, so dass der anrufende Benutzer die Dienstanforderungsnachricht an ein Vernetzungs- und Zusammenarbeitsgateway des externen Netzwerks gemäß der durch den angerufenen Benutzer aus dem gegenwärtigen Netzwerk portierten weitergeleiteten Nummer, dem Domänennamen der Ursprungsdomäne des angerufenen Benutzers oder der Internetprotokolladresse des angerufenen Benutzers sendet und die durch den angerufenen Benutzer aus dem gegenwärtigen Netzwerk portierte weitergeleitete Nummer, den Domänennamen der Ursprungsdomäne des angerufenen Benutzers oder die Internetprotokolladresse des angerufenen Benutzers in der gesandten Dienstanforderungsnachricht trägt.

26. Gateway nach Anspruch 17, 20 oder 23, wobei das Betriebsmodul ferner umfasst:
ein drittes Betriebsuntermodul, konfiguriert zum: wenn der anrufende Benutzer ein regulärer Benutzer des gegenwärtigen Netzwerks, ein Internetbenutzer des gegenwärtigen Netzwerks, ein fremder Dienstanbieter des gegenwärtigen Netzwerks oder ein Gruppenbenutzer des gegenwärtigen Netzwerks ist, und nachdem bestimmt wird, dass die auf der Nummernportabilität-Dienstniveau-Übereinkunft basierende Verarbeitungsrichtlinie dem anrufenden Benutzer gestattet, die Dienstanforderungsnachricht an den angerufenen Benutzer des gegenwärtigen Netzwerks oder den angerufenen Benutzer des externen Netzwerks zu senden, Durchführen eines Gebührenberechnungsvorgangs mit einem Gebührenberechnungssystem eines Betreibers, zu dem der anrufende Benutzer gemäß den Leitweginformationen des angerufenen Benutzers gehört, und Tragen der Leitweginformationen des angerufenen Benutzers in Informationen, die mit dem Gebührenberechnungssystem ausgetauscht werden.

27. Gateway nach Anspruch 18, 21 oder 24, wobei das Betriebsmodul ferner umfasst:
ein Informationsbereitstellungsuntermodul, konfiguriert zum: wenn Senden der Dienstanforderungsnachricht fehlschlägt, Auffordern angemessener Leitweginformationen des angerufenen Benutzers für den anrufenden Benutzer.

## Revendications

1. Procédé de réalisation de portabilité de numéro, comprenant les étapes suivantes :
A. recevoir (101), par une passerelle d'interconnexion et d'interfonctionnement, un message de requête envoyé par un utilisateur appelant, le message de requête contenant un identifiant d'un utilisateur appelé, et l'utilisateur appelant comportant un utilisateur régulier, un utilisateur Internet, un fournisseur de services tiers ou un utilisateur de groupe d'un présent réseau ou d'un réseau externe, la passerelle d'interconnexion et d'interfonctionnement étant une passerelle Parlay X ou un SDP ;
B. interroger (102) une base de données de portabilité de numéro selon l'identifiant de l'utilisateur appelé pour obtenir des informations de routage de l'utilisateur appelé, les informations de routage comprenant : un numéro routé porté dans le présent réseau à partir d'un réseau d'origine de l'utilisateur appelé par l'utilisateur appelé, un numéro routé porté hors du présent réseau par l'utilisateur appelé, un nom de domaine d'un domaine d'origine de l'utilisateur appelé, ou une adresse de protocole Internet de l'utilisateur appelé ; et
C. exécuter (103), selon un accord sur les niveaux de service de portabilité de numéro (NP SLA) et les informations de routage de l'utilisateur appelé, au moins une des opérations suivantes : exécuter un routage sur l'utilisateur appelé, exécuter une facturation sur l'utilisateur appelant ou sur l'utilisateur appelé, et générer une facture comptable entre au moins deux éléments parmi le fournisseur de services tiers, un opérateur d'un présent réseau et un opérateur d'un réseau externe, une politique basée sur le NP SLA comportant trois opérations et des tarifs correspondant aux trois opérations, les trois opérations comprenant : « interdire l'envoi », « envoi autorisé » ou « demande de confirmation ».

2. Procédé selon la revendication 1 dans lequel, avant l'étape C, le procédé comprend en outre :
négocier, par la passerelle d'interconnexion et d'interfonctionnement, l'accord sur les niveaux de service de portabilité de numéro avec l'utilisateur appelant.

3. Procédé selon la revendication 1 ou 2, dans lequel le message de requête comprend un message de requête de service ; et l'étape C comprend en outre :
après que la passerelle d'interconnexion et d'interfonctionnement a déterminé, selon les informations de routage de l'utilisateur appelé, que l'utilisateur appelé est porté hors du présent réseau, ajouter le numéro routé porté hors du présent réseau par l'utilisateur appelé, le nom de domaine du domaine d'origine de l'utilisateur appelé ou l'adresse de protocole Internet de l'utilisateur appelé à l'identifiant de l'utilisateur appelé.

4. Procédé selon la revendication 3, dans lequel l'étape consistant à exécuter un routage sur l'utilisateur appelé comprend :
transmettre, par la passerelle d'interconnexion et d'interfonctionnement, le message de requête de service à une passerelle d'interconnexion et d'interfonctionnement du réseau externe, et inclure le numéro routé porté hors du présent réseau par l'utilisateur appelé, le nom de domaine du domaine d'origine de l'utilisateur appelé ou l'adresse de protocole Internet de l'utilisateur appelé dans le message de requête de service transmis ; et
retourner, par la passerelle d'interconnexion et d'interfonctionnement, un rapport de résultat d'envoi de message à l'utilisateur appelant.

5. Procédé selon la revendication 3, dans lequel l'étape C comprend en outre :
si la passerelle d'interconnexion et d'interfonctionnement détermine qu'une politique de traitement basée sur l'accord sur les niveaux de service de portabilité de numéro permet à l'utilisateur appelant d'envoyer le message de requête de service à un utilisateur appelé du réseau externe, exécuter un routage sur l'utilisateur appelé selon le numéro routé porté hors du présent réseau par l'utilisateur appelé, le nom de domaine du domaine d'origine de l'utilisateur appelé ou l'adresse de protocole Internet de l'utilisateur appelé, et générer la facture comptable entre au moins deux éléments parmi le fournisseur de services tiers, l'opérateur du présent réseau et l'opérateur du réseau externe ; ou
si la passerelle d'interconnexion et d'interfonctionnement détermine qu'une politique de traitement basée sur l'accord sur les niveaux de service de portabilité de numéro interdit à l'utilisateur appelant d'envoyer le message de requête de service à un utilisateur appelé du réseau externe, terminer une procédure d'envoi du message de requête de service.

6. Procédé selon la revendication 1 ou 2, dans lequel le message de requête comprend un message de requête de service ; et l'étape C comprend :
si la passerelle d'interconnexion et d'interfonctionnement détermine qu'une politique de traitement basée sur l'accord sur les niveaux de service de portabilité de numéro permet à l'utilisateur appelant d'envoyer le message de requête de service à l'utilisateur appelé du présent réseau et détermine, selon les informations de routage de l'utilisateur appelé, que l'utilisateur appelé est porté dans le présent réseau à partir du réseau d'origine de l'utilisateur appelé, exécuter un routage sur l'utilisateur appelé selon le numéro routé porté dans le présent réseau à partir du réseau d'origine de l'utilisateur appelé par l'utilisateur appelé, le nom de domaine du domaine d'origine de l'utilisateur appelé ou l'adresse de protocole Internet de l'utilisateur appelé, et générer la facture comptable entre au moins deux éléments parmi le fournisseur de services tiers, l'opérateur du présent réseau et l'opérateur du réseau externe.

7. Procédé selon la revendication 6, dans lequel l'étape consistant à exécuter un routage sur l'utilisateur appelé comprend :
envoyer, par la passerelle d'interconnexion et d'interfonctionnement, le message de requête de service à un élément réseau d'un réseau d'infrastructure du présent réseau par l'intermédiaire d'un composant de service, et inclure le numéro routé porté dans le présent réseau à partir du réseau d'origine de l'utilisateur appelé par l'utilisateur appelé, le nom de domaine du domaine d'origine de l'utilisateur appelé ou l'adresse de protocole Internet de l'utilisateur appelé dans le message de requête de service envoyé ; et
retourner, par la passerelle d'interconnexion et d'interfonctionnement, un rapport de résultat d'envoi de message à l'utilisateur appelant.

8. Procédé selon l'une quelconque des revendications 1 à 7 dans lequel, avant l'étape consistant à exécuter un routage sur l'utilisateur appelé, le procédé comprend en outre :
si la politique de traitement basée sur l'accord sur les niveaux de service de portabilité de numéro nécessite que la passerelle d'interconnexion et d'interfonctionnement exécute une politique de demande de confirmation, après que la passerelle d'interconnexion et d'interfonctionnement a déterminé, selon les informations de routage de l'utilisateur appelé, que l'utilisateur appelé est porté dans le réseau ou est porté hors du réseau, exécuter, selon la politique de demande de confirmation, une demande et une confirmation auprès de l'utilisateur appelant, dans lequel si l'utilisateur appelant accepte d'exécuter une provision demandée, la passerelle d'interconnexion et d'interfonctionnement exécute un routage sur l'utilisateur appelé et mete en oeuvre des étapes subséquentes ; si l'utilisateur appelant refuse d'exécuter une provision demandée, la passerelle d'interconnexion et d'interfonctionnement termine la procédure d'envoi du message de requête de service.

9. Procédé selon la revendication 1 ou 2, dans lequel le message de requête comprend un message de requête de demande de portabilité de numéro ; et
l'étape C comprend :
après que la passerelle d'interconnexion et d'interfonctionnement a déterminé, selon les informations de routage de l'utilisateur appelé, que l'utilisateur appelé est porté dans le présent réseau à partir du réseau d'origine de l'utilisateur appelé, envoyer le numéro routé porté dans le présent réseau à partir du réseau d'origine de l'utilisateur appelé par l'utilisateur appelé, le nom de domaine du domaine d'origine de l'utilisateur appelé ou l'adresse de protocole Internet de l'utilisateur appelé à l'utilisateur appelant ; et recevoir un message de requête de service envoyé par l'utilisateur appelant, le message de requête de service contenant le numéro routé porté dans le réseau à partir du réseau d'origine de l'utilisateur appelé, le nom de domaine du domaine d'origine de l'utilisateur appelé ou l'adresse de protocole Internet de l'utilisateur appelé ; et
après que la passerelle d'interconnexion et d'interfonctionnement a déterminé qu'une politique de traitement basée sur l'accord sur les niveaux de service de portabilité de numéro permet à l'utilisateur appelant d'envoyer le message de requête de service à l'utilisateur appelé du présent réseau et a déterminé, selon les informations de routage de l'utilisateur appelé, que l'utilisateur appelé est porté dans le présent réseau à partir du réseau d'origine de l'utilisateur appelé, exécuter un routage sur l'utilisateur appelé selon le numéro routé porté dans le réseau à partir du réseau d'origine de l'utilisateur appelé par l'utilisateur appelé, le nom de domaine du domaine d'origine de l'utilisateur appelé ou l'adresse de protocole Internet de l'utilisateur appelé, et générer la facture comptable entre au moins deux éléments parmi le fournisseur de services tiers, l'opérateur du présent réseau et l'opérateur du réseau externe.

10. Procédé selon la revendication 9, dans lequel l'étape consistant à exécuter un routage sur l'utilisateur appelé comprend :
envoyer, par la passerelle d'interconnexion et d'interfonctionnement, le message de requête de service à un élément réseau d'un réseau d'infrastructure du présent réseau par l'intermédiaire d'un composant de service, et inclure le numéro routé porté dans le réseau à partir du réseau d'origine de l'utilisateur appelé par l'utilisateur appelé, le nom de domaine du domaine d'origine de l'utilisateur appelé ou l'adresse de protocole Internet de l'utilisateur appelé dans le message de requête de service envoyé ; et
retourner, par la passerelle d'interconnexion et d'interfonctionnement, un rapport de résultat d'envoi de message à l'utilisateur appelant.

11. Procédé selon la revendication 1 ou 2, dans lequel le message de requête comprend un message de requête de demande de portabilité de numéro ; et
l'étape C comprend :
après que la passerelle d'interconnexion et d'interfonctionnement a déterminé, selon les informations de routage de l'utilisateur appelé, que l'utilisateur appelé est porté hors du présent réseau, envoyer le numéro routé porté hors du présent réseau par l'utilisateur appelé, le nom de domaine du domaine d'origine de l'utilisateur appelé ou l'adresse de protocole Internet de l'utilisateur appelé à l'utilisateur appelant, afin que l'utilisateur appelant envoie un message de requête de service à une passerelle d'interconnexion et d'interfonctionnement du réseau externe, le message de requête de service contenant le numéro routé porté hors du présent réseau par l'utilisateur appelé, le nom de domaine du domaine d'origine de l'utilisateur appelé ou l'adresse de protocole Internet de l'utilisateur appelé.

12. Procédé selon la revendication 4, 7, 10 ou 11, comprenant en outre :
lorsque l'envoi du message de requête de service échoue, demander, par la passerelle d'interconnexion et d'interfonctionnement, des informations de routage appropriées de l'utilisateur appelé à l'utilisateur appelant.

13. Procédé selon l'une quelconque des revendications 1 à 12, comprenant en outre :
lorsque l'utilisateur appelant est un utilisateur régulier du présent réseau, un utilisateur Internet du présent réseau, un fournisseur de services tiers du présent réseau ou un utilisateur de groupe du présent réseau, et après que la passerelle d'interconnexion et d'interfonctionnement a déterminé que la politique de traitement basée sur l'accord sur les niveaux de service de portabilité de numéro permet à l'utilisateur appelant d'envoyer le message de requête de service à l'utilisateur appelé du présent réseau ou à l'utilisateur appelé du réseau externe, exécuter une opération de facturation avec un système de facturation d'un opérateur auquel l'utilisateur appelant appartient selon les informations de routage de l'utilisateur appelé et inclure les informations de routage de l'utilisateur appelé dans des informations échangées avec le système de facturation de l'opérateur auquel l'utilisateur appelant appartient.

14. Procédé selon l'une quelconque des revendications 1 à 12, comprenant en outre :
après avoir déterminé, selon les informations de routage de l'utilisateur appelé, que l'utilisateur appelé est porté dans le présent réseau à partir du réseau d'origine de l'utilisateur appelé, exécuter, par la passerelle d'interconnexion et d'interfonctionnement, une opération de facturation avec un système de facturation d'un opérateur auquel l'utilisateur appelant appartient selon les informations de routage de l'utilisateur appelé, et inclure les informations de routage de l'utilisateur appelé dans des informations échangées avec le système de facturation de l'opérateur auquel l'utilisateur appelant appartient.

15. Passerelle d'interconnexion et d'interfonctionnement, comprenant :
un module de réception (51), configuré pour recevoir un message de requête envoyé par un utilisateur appelant, le message de requête contenant un identifiant d'un utilisateur appelé, et l'utilisateur appelant comportant un utilisateur régulier, un utilisateur Internet, un fournisseur de services tiers ou un utilisateur de groupe d'un présent réseau ou d'un réseau externe ;
un module d'obtention (52), configuré pour interroger une base de données de portabilité de numéro selon l'identifiant de l'utilisateur appelé pour obtenir des informations de routage de l'utilisateur appelé, les informations de routage comportant : un numéro routé porté dans le présent réseau à partir d'un réseau d'origine de l'utilisateur appelé par l'utilisateur appelé, un numéro routé porté hors du présent réseau par l'utilisateur appelé, un nom de domaine d'un domaine d'origine de l'utilisateur appelé, ou une adresse de protocole Internet de l'utilisateur appelé ; et un module de commande (53), configuré pour : selon un accord sur les niveaux de service de portabilité de numéro et les informations de routage de l'utilisateur appelé, exécuter au moins un élément parmi les opérations suivantes : exécuter un routage sur l'utilisateur appelé, exécuter une facturation sur l'utilisateur appelant ou sur l'utilisateur appelé, et générer une facture comptable entre au moins deux éléments parmi le fournisseur de services tiers, un opérateur d'un présent réseau et un opérateur d'un réseau externe, une politique basée sur le NP SLA comportant trois opérations et des tarifs correspondant aux trois opérations, les trois opérations comprenant : « interdire l'envoi », « envoi autorisé » ou « demande de confirmation ».

16. Passerelle selon la revendication 15, comprenant en outre :
un module de négociation (54), configuré pour négocier l'accord sur les niveaux de service de portabilité de numéro avec l'utilisateur appelant.

17. Passerelle selon la revendication 16, le module de commande comprenant :
un premier sous-module de détermination, configuré pour : selon les informations de routage de l'utilisateur appelé obtenues par le module d'obtention, déterminer que l'utilisateur appelé est porté dans le présent réseau à partir du réseau d'origine de l'utilisateur appelé ou est porté hors du présent réseau ;
un sous-module d'ajout, configuré pour : après que le premier sous-module de détermination a déterminé que l'utilisateur appelé est porté hors du présent réseau, ajouter le numéro routé porté hors du présent réseau par l'utilisateur appelé, le nom de domaine du domaine d'origine de l'utilisateur appelé, ou l'adresse de protocole Internet de l'utilisateur appelé à l'identifiant de l'utilisateur appelé ; et
un premier sous-module de commande, configuré pour : après que le sous-module d'ajout a ajouté le numéro routé porté hors du présent réseau par l'utilisateur appelé, le nom de domaine du domaine d'origine de l'utilisateur appelé ou l'adresse de protocole Internet de l'utilisateur appelé à l'identifiant de l'utilisateur appelé, et que le premier sous-module de détermination a déterminé qu'une politique de traitement basée sur l'accord sur les niveaux de service de portabilité de numéro permet à l'utilisateur appelant d'envoyer un message de requête de service à un utilisateur appelé du réseau externe, exécuter un routage sur l'utilisateur appelé selon le numéro routé porté hors du présent réseau par l'utilisateur appelé, le nom de domaine du domaine d'origine de l'utilisateur appelé ou l'adresse de protocole Internet de l'utilisateur appelé, et générer la facture comptable entre au moins deux éléments parmi le fournisseur de services tiers, l'opérateur du présent réseau et l'opérateur du réseau externe.

18. Passerelle selon la revendication 17, le premier sous-module de commande étant configuré spécifiquement pour transmettre le message de requête de service reçu par le module de réception à une passerelle d'interconnexion et d'interfonctionnement du réseau externe, et inclure le numéro routé porté hors du présent réseau par l'utilisateur appelé, le nom de domaine du domaine d'origine de l'utilisateur appelé ou l'adresse de protocole Internet de l'utilisateur appelé dans le message de requête de service transmis, et retourner un rapport de résultat d'envoi de message à l'utilisateur appelant.

19. Passerelle selon la revendication 18, le module de commande comprenant en outre :
un sous-module de terminaison, configuré pour : après que le premier sous-module de détermination a déterminé que la politique de traitement basée sur l'accord sur les niveaux de service de portabilité de numéro interdit à l'utilisateur appelant d'envoyer le message de requête de service à l'utilisateur appelé du réseau externe, et a déterminé, selon les informations de routage de l'utilisateur appelé, que l'utilisateur appelé est porté hors du présent réseau, terminer une procédure d'envoi du message de requête de service.

20. Passerelle selon la revendication 19, le premier sous-module de commande étant en outre configuré pour : après que le premier sous-module de détermination a déterminé que la politique de traitement basée sur l'accord sur les niveaux de service de portabilité de numéro permet à l'utilisateur appelant d'envoyer le message de requête de service à l'utilisateur appelé du présent réseau et a déterminé, selon les informations de routage de l'utilisateur appelé, que l'utilisateur appelé est porté dans le présent réseau à partir du réseau d'origine de l'utilisateur appelé, exécuter un routage sur l'utilisateur appelé selon le numéro routé porté dans le présent réseau à partir du réseau d'origine de l'utilisateur appelé par l'utilisateur appelé, le nom de domaine du domaine d'origine de l'utilisateur appelé ou l'adresse de protocole Internet de l'utilisateur appelé, et générer la facture comptable entre au moins deux éléments parmi le fournisseur de services tiers, l'opérateur du présent réseau et l'opérateur du réseau externe.

21. Passerelle selon la revendication 20, le premier sous-module de commande étant configuré spécifiquement pour envoyer le message de requête de service reçu par le module de réception à un élément réseau d'un réseau d'infrastructure du présent réseau par l'intermédiaire d'un composant de service, et inclure le numéro routé porté dans le présent réseau à partir du réseau d'origine de l'utilisateur appelé par l'utilisateur appelé, le nom de domaine du domaine d'origine de l'utilisateur appelé ou l'adresse de protocole Internet de l'utilisateur appelé dans le message de requête de service envoyé.

22. Passerelle selon la revendication 19 ou 21, le module de commande comprenant en outre :
un sous-module de demande, configuré pour : lorsque le module de négociation négocie avec l'utilisateur appelant pour déterminer d'exécuter une politique de demande de confirmation dans l'accord sur les niveaux de service de portabilité de numéro, et après que le premier sous-module de détermination a déterminé, selon les informations de routage de l'utilisateur appelé, que l'utilisateur appelé est porté dans le présent réseau à partir du réseau d'origine de l'utilisateur appelé ou est porté hors du présent réseau, exécuter une demande et une confirmation auprès de l'utilisateur appelant selon la politique de demande de confirmation ;
le sous-module de terminaison étant en outre configuré pour : lorsque l'utilisateur appelant refuse d'exécuter une provision demandée, terminer la procédure d'envoi du message de requête de service.

23. Passerelle selon la revendication 16, le module de commande comprenant :
un deuxième sous-module de détermination, configuré pour : selon les informations de routage de l'utilisateur appelé obtenues par le module d'obtention, déterminer que l'utilisateur appelé est porté dans le présent réseau à partir du réseau d'origine de l'utilisateur appelé ou est porté hors du présent réseau ;
un sous-module d'envoi de numéro, configuré pour : après que le deuxième sous-module de détermination a déterminé que l'utilisateur appelé est porté dans le présent réseau à partir du réseau d'origine de l'utilisateur appelé, envoyer le numéro routé porté dans le présent réseau à partir du réseau d'origine de l'utilisateur appelé par l'utilisateur appelé, le nom de domaine du domaine d'origine de l'utilisateur appelé ou l'adresse de protocole Internet de l'utilisateur appelé à l'utilisateur appelant ;
un sous-module de réception de message, configuré pour recevoir un message de requête de service qui est envoyé par l'utilisateur appelant selon le numéro routé porté dans le présent réseau à partir du réseau d'origine de l'utilisateur appelé par l'utilisateur appelé, le nom de domaine du domaine d'origine de l'utilisateur appelé ou l'adresse de protocole Internet de l'utilisateur appelé, le message de requête de service contenant le numéro routé porté dans le réseau à partir du réseau d'origine de l'utilisateur appelé par l'utilisateur appelé, le nom de domaine du domaine d'origine de l'utilisateur appelé ou l'adresse de protocole Internet de l'utilisateur appelé ; et
un deuxième sous-module de commande, configuré pour : après que le deuxième sous-module de détermination a déterminé qu'une politique de traitement basée sur l'accord sur les niveaux de service de portabilité de numéro permet à l'utilisateur appelant d'envoyer le message de requête de service à l'utilisateur appelé du présent réseau et a déterminé, selon les informations de routage de l'utilisateur appelé, que l'utilisateur appelé est porté dans le présent réseau à partir du réseau d'origine de l'utilisateur appelé, exécuter un routage sur l'utilisateur appelé selon le numéro routé porté dans le réseau à partir du réseau d'origine de l'utilisateur appelé par l'utilisateur appelé, le nom de domaine du domaine d'origine de l'utilisateur appelé ou l'adresse de protocole Internet de l'utilisateur appelé, et générer la facture comptable entre au moins deux éléments parmi le fournisseur de services tiers, l'opérateur du présent réseau et l'opérateur du réseau externe.

24. Passerelle selon la revendication 23, le deuxième sous-module de commande étant configuré spécifiquement pour envoyer le message de requête de service reçu par le sous-module de réception de message à un élément réseau d'un réseau d'infrastructure du présent réseau par l'intermédiaire d'un composant de service, et inclure le numéro routé porté dans le réseau à partir du réseau d'origine de l'utilisateur appelé par l'utilisateur appelé, le nom de domaine du domaine d'origine de l'utilisateur appelé ou l'adresse de protocole Internet de l'utilisateur appelé dans le message de requête de service envoyé, et retourner un rapport de résultat d'envoi de message à l'utilisateur appelant.

25. Passerelle selon la revendication 23, le sous-module d'envoi de numéro étant en outre configuré pour : après que le deuxième sous-module de détermination a déterminé que l'utilisateur appelé est porté hors du présent réseau, envoyer le numéro routé porté hors du présent réseau par l'utilisateur appelé, le nom de domaine du domaine d'origine de l'utilisateur appelé ou l'adresse de protocole Internet de l'utilisateur appelé à l'utilisateur appelant, afin que l'utilisateur appelant envoie le message de requête de service à une passerelle d'interconnexion et d'interfonctionnement du réseau externe selon le numéro routé porté hors du présent réseau par l'utilisateur appelé, le nom de domaine du domaine d'origine de l'utilisateur appelé ou l'adresse de protocole Internet de l'utilisateur appelé, en y incluant le numéro routé porté hors du présent réseau par l'utilisateur appelé, le nom de domaine du domaine d'origine de l'utilisateur appelé ou l'adresse de protocole Internet de l'utilisateur appelé dans le message de requête de service envoyé.

26. Passerelle selon la revendication 17, 20 ou 23, le module de commande comprenant en outre :
un troisième sous-module de commande, configuré pour : lorsque l'utilisateur appelant est un utilisateur régulier du présent réseau, un utilisateur Internet du présent réseau, un fournisseur de service tiers du présent réseau ou un utilisateur de groupe du présent réseau, et après qu'il a été déterminé que la politique de traitement basée sur l'accord sur les niveaux de service de portabilité de numéro permet à l'utilisateur appelant d'envoyer le message de requête de service à l'utilisateur appelé du présent réseau ou à l'utilisateur appelé du réseau externe, exécuter une opération de facturation avec un système de facturation d'un opérateur auquel l'utilisateur appelant appartient selon les informations de routage de l'utilisateur appelé et inclure les informations de routage de l'utilisateur appelé dans des informations échangées avec le système de facturation.

27. Passerelle selon la revendication 18, 21 ou 24, le module de commande comprenant en outre :
un sous-module de fourniture d'informations, configuré pour : lorsque l'envoi du message de requête de service échoue, demander des informations de routage appropriées de l'utilisateur appelé à l'utilisateur appelant.
